(19) Europäisches Patentamt
European Patent Office
Office européen des brevets

(11) EP 0 841 541 A1

(12) EUROPEAN PATENT APPLICATION
published in accordance with Art. 158(3) EPC

(43) Date of publication:
13.05.1998 Bulletin 1998/20

(21) Application number: 96935533.8

(22) Date of filing: 01.11.1996

(51) Int. Cl.$^6$: **G01D 7/00**, G01D 7/02,
G01D 7/04, G01D 7/06,
G01D 7/08, G01D 7/10,
G01D 7/12

(86) International application number:
PCT/JP96/03221

(87) International publication number:
WO 97/25593 (17.07.1997 Gazette 1997/31)

(84) Designated Contracting States:
AT BE CH DE DK ES FI FR GB GR IE IT LI LU MC
NL PT SE

(30) Priority: 08.01.1996 JP 17062/96
08.01.1996 JP 17064/96
08.01.1996 JP 17065/96
08.01.1996 JP 17066/96
08.01.1996 JP 17067/96
10.01.1996 JP 18249/96

(71) Applicant: HKS CO., LTD.
Fujinomiya-shi, Shizuoka 418-01 (JP)

(72) Inventor:
SUZUKI, Tatsunori
HKS Co., Ltd.
Shizuoka 418-01 (JP)

(74) Representative: Casalonga, Axel
BUREAU D.A. CASALONGA - JOSSE
Morassistrasse 8
80469 München (DE)

(54) **VEHICLE INFORMATION DISPLAY**

(57) A vehicular information display apparatus 10 for displaying vehicular operational information comprises: a display 16 for displaying vehicular operational information by employing a simulation; and a control unit 11 for converting the vehicular operational information that is received into a conditional change for the simulation, and for permitting the display 16 to exhibit the conditional change of the simulation.

F I G. 19

**Description**

FIELD OF THE INVENTION

The present invention relates to a vehicular information display apparatus that displays vehicular operational information to inform a operator of the vehicular operating condition.

BACKGROUND OF THE INVENTION

(A) Conventionally, analog or digital display meters that are mounted in a vehicle constitute a vehicular information display apparatus, and by referring to these meters, an operator can ascertain the operating condition of a vehicle.

Recently, an apparatus has been proposed that displays, on an installed television, images of readings obtained by meters, and thereby provide information concerning the operating condition of a vehicle.

The conventional vehicular information display apparatuses, however, provide poor visual effects or audio effects relative to the display of vehicular operational information. Further, a conventional apparatus is not interesting and pleasing to look at when an operator is ascertaining the operating condition of the vehicle.

(B) As is described in Japanese Unexamined Utility Model Publication No. Sho 62-44744, the conventional technique can calculate a cumulative travel distance for a vehicle (transient travel distance information), and can exhibit on a display a distance for each of a plurality of operating periods.

However, the conventional vehicular information display apparatus displays only the cumulative travel distance for a vehicle for each of the operation periods, and can not evaluate the many transient operating condition phases for the vehicle over a plurality of operational information items.

(C) As is described in Japanese Unexamined Patent Publication No. Sho 59-188545, a conventional vehicular information display apparatus comprises an infrared ray detector, for detecting a road temperature when a vehicle is moving; a determiner for employing the result obtained by the infrared ray detector to determine whether or not the road is icy; and a warning generator for generating a warning when the determiner has determined that the road is icy.

The conventional vehicular information display apparatus, however, issues a warning after it confirms that the road surface is icy, and can not predict in advance hazards that a moving vehicle may encounter.

(D) As is described in Japanese Unexamined Utility Model Publication No. Hei 4-136547, the conventional technique detects a first travel speed and a second travel speed that is slower than the first, and measures the time that elapses between the detection of the first vehicular speed and the detection of the second vehicular speed. A running resistance is calculated by comparing the time obtained with a predetermined reference value and is shown on a display.

Although the conventional vehicular information display apparatus calculates the running resistance for the vehicle by detecting travel speeds at two points, the relationship between the running resistance and the travel speed can not be specified by the first-order expression. Therefore, high reliability is not possible in the acquisition of the running resistances at points other than those employed for the actual measurement of travel speed.

(E) Since deterioration of lubricating oil that is injected into an engine occurs during use, the oil must be changed. Conventionally, therefore, the deterioration of lubricating oil is calculated by using the results of the detection of those factors, such as travel distance, operating hours and engine revolutions for a vehicle, that causes the deterioration of the lubricating oil. When the degree of deterioration exceeds a permissible value that is determined in advance, the time for the lubricating oil to be changed is exhibited on a display.

In Japanese Unexamined Patent Publication No. Hei 5-214920, in order to improve the accuracy for the detection of the degree of deterioration and the accuracy for the detection of the time for changing the lubricating oil, the degree of deterioration for lubricating oil is determined by using the operating hours and the revolutions of an engine, and is corrected in consonance with the temperature of the lubricating oil, the exhaust temperature or the fuel consumption.

The conventional technique has the following shortcomings.

(1) Deterioration of lubricating oil is closely correlated with engine load. In an apparatus that employs a vehicle's distance of travel to determine the degree of deterioration of lubricating oil, there is no accumulation of travel distances while the vehicle is idling and is not traveling, so that the degree of deterioration of lubricating oil can not be accurately ascertained.

(2) When an engine is started while it is cold, the temperature of the lubricating oil changes greatly, which results in the deterioration of the lubricating oil. An apparatus that to determine the degree of deterioration of lubricating oil employs a vehicle's travel distance, operating hours or engine revolutions can not ascertain the extent of the deterioration of the lubricating oil that occurs when the engine is activated when cold.

2

(3) In the apparatus (Japanese Unexamined Patent Publication No. Hei 5-214920) that compensates for the degree of deterioration of lubricating oil in consonance with the temperature of the lubricating oil, the exhaust temperature, or fuel consumption, the temperature of the lubricating oil, the exhaust temperature and the fuel consumption are employed only in a process by which the degree of deterioration is corrected, and the accuracy of the detection of the degree of deterioration of lubricating oil is limited.

(F) Although a slight knock that occurs in an engine may enhance fuel performance and mechanical performance, the occurrence of a heavy knock may damage the mechanism.

As is described in Japanese Unexamined Patent Publications No. Sho 58-201031 and No. Sho 61-142367, a conventional knock detector comprises a microphone; a bandpass filter, which passes a signal of a knock frequency band that is selected from those signals input with the microphone; and a controller, which examines a knock by using a signal output by the bandpass filter and, in accordance with the result, generates a control signal for control of an engine.

Further, as is shown in Japanese Unexamined Patent Publication No. Sho 55-102727, a knock warning device comprises a knock strength determiner, for employing the vibration of an engine to determine the strength of the knock; a warning signal generator, for generating a warning signal in consonance with the strength of the knock; and a warning transmitter, for acoustically outputting the warning signal.

The above prior art has the following shortcomings.

(1) Although the conventional knock detector, which includes a microphone and a bandpass filter, generates a control signal to control an engine when a knock has occurred, it has no means by which to inform an operator of the occurrence of the knock.

(2) As the conventional knock warning device, which has a warning transmitter, must additionally include a knock strength determiner for determining the strength of a knock and a warning signal generator for generating a warning signal in consonance with the strength of the knock, the structure of the device will be complicated. Since a warning sound is not a live knock sound, there is a limit on information that can be supplied to operators when a knock occurs so that they can instinctively understand it.

DISCLOSURE OF THE INVENTION

(A) It is, therefore, one object of the present invention to enhance the visual or acoustic effects provided by a display of vehicular operational information and to make it more interesting and pleasing when ascertaining an operating condition of a vehicle.

According to the invention cited in claim 1, a vehicular information display apparatus for displaying vehicular operational information comprises: a display for displaying vehicular operational information by employing a simulation; and a control unit for converting the vehicular operational information that is received into a conditional change for the simulation, ad for permitting the display to exhibit the conditional change of the simulation.

According to the invention cited in claim 2, the simulation cited in claim 1 is of a living creature, and the control unit converts the vehicular operational information into an ecological change affecting the living creature.

According to the invention cited in claim 3, in addition to the invention cited in claim 2, the control unit determines in advance a fault standard by which to cope with a degraded vehicular operating condition. When the operating condition exceeds the fault standard, the living creature is determined to be critically ill, and is regarded as being dead when the living creature has been in a critically ill state for a specified time.

According to the invention cited in claim 4, in the invention cited in claim 2 or 3, the living creature is a fish that is in a virtual water tank shown on the display, and the control unit performs at least one of the following functions:

(a) increasing temperature in the water tank when the vehicle is being operated with a heavy load;
(b) representing an average fuel expense for the vehicle by displaying a pH level for the water tank;
(c) representing deterioration of engine oil in the vehicle by displaying a degree of contamination of water in the water tank; and
(d) representing an idling period for the vehicle by displaying an air supply state for the water tank.

According to the invention cited in claim 5, in the invention cited in one of claims 2 through 4, the control unit determines in advance a warning standard to cope with the vehicular operating condition, and also determines in advance a warning movement that the living creature will make when the vehicular operating condition is that represented by the warning standard, so that when the vehicular operating condition is that represented by the warning standard, the warning movement by the living creature is displayed.

According to the present invention cited in claim 6, in the invention cited in one of claims 2 through 5, the control unit determines in advance a special movement inherent to the living creature. When the vehicle is in a specific vehicular operating condition, display of a prediction with a specified probability for a special movement is performed. After the display of the predicted special movement, display for a actual special movement with a specified probability is performed.

The invention cited in claim 1 and 2 provides operation (1) as follows:

(1) The vehicular operation condition can be ascertained by referring to conditional changes of a simulation, such as of a living creature or a natural phenomenon (at least one of a change in the shape, or color of, or in the sounds produced by the simulation), that are displayed in the display in consonance with the vehicular operational information. Therefore, the visual effects or the audio effects for the display of the vehicular operational information are enhanced, and to ascertain the vehicular operating condition, the design and acoustics can be made more interesting and enjoyable to look at.

The invention cited in claim 3 provides the following operation (2):

(2) The deterioration of the vehicular operating condition is judged by referring to the fault standard that is determined in advance, ad an operator is informed of the advance of the deterioration by display of a critically ill or dead living creature. When the operator acts to improve the condition of the critically ill living creature by removing an obstacle, he may save it from imminent death.

The invention cited in claim 4 provides operations (3a) through (3d):

(3a) Water temperature in the tank is increased when a vehicle is operated with a heavy load. When the water temperature at which fish can live is specified as a fault standard, an abnormality appearing during a high-load operation is evidenced by the critically ill condition or the death of fish.

(3b) Average fuel expense for operation of a vehicle is represented by the pH level in the water tank. When the pH level at which fish can exist is employed as a fault standard, a fuel expense abnormality is evidenced by the critically ill condition or the death of fish.

(3c) Deterioration of engine oil in a vehicle is represented by the degree of contamination of the water in a water tank. When, for example, a fuel consumption rate that is an index for the deterioration of the engine oil is employed as a fault standard, abnormal deterioration of the engine oil is evidenced by the critically ill condition or the death of a fish.

(3d) The idling period for a vehicle is represented by the state of the air supply in a water tank. A continuous stop time that is an index for the idling period is employed as a fault standard, and an unnecessary warm-up or unnecessary after-idling is evidenced by the critically ill condition or the death of a fish.

The invention cited in claim 5 has operation (4):

(4) When the vehicular operating condition is that represented by a warning standard, such as when an engine's revolutions per minute reading is too high, notification of an abnormal operating condition is performed by displaying a warning activity, such as where one living creature kills another.

The invention cited in claim 6 has operation (5):

(5) In a specific vehicular operating condition, such as a vehicular speed of zero (e.g., being halted in a traffic jam), a predictive display ad a plenary display of a special movement, such as the changing of color by a living creature, are provided with a specified probability. As a result, an operator's interest in the information carried on the display is increased, and stress that accompanied the operation of a vehicle is relieved.

(B) It is another object of the present invention to evaluate many transient vehicular operating condition phases.

According to the invention cited in claim 7, a vehicular information display apparatus, which displays on a display transient operational information for an arbitrary vehicular operation period, comprises a calculation unit for performing calculation using multiple sets of transient operational data that correspond to vehicular operational information items, and for displaying, on the display, a set of transient operational data for a specific operation period, the calculation unit permitting the display to display the set of transient operational data for each of the operation periods.

The invention cited in claim 7 has operation (1):

(1) A set of transient vehicular operational data (a travel distance, average fuel consumption, operation period, etc.) can be displayed for each operation period. Therefore, many phases of the transient vehicular operational state can be evaluated. For example, travel distances, average fuel consumption and operating periods are compared for different routes to the same destination, or travel distances, average fuel consumption and operating periods can be compared when a plurality of operators handle the same vehicle.

(C) It is an additional object of the present invention to predict the danger represented by an icy road surface during movement.

According to the invention cited in claim 8, a vehicular information display apparatus, which provides vehicular operational information on a display, comprises: a detector for detecting a road surface temperature while moving; and a calculation unit for representing a change in the road surface temperature, which is detected by the detector, relative to transient vehicular operational information.

According to the invention cited in claim 9, in the invention cited in claim 8, the calculation unit determines in advance a prior notice standard for an icy road surface relative to the change in the road surface temperature that is detected. When the change in the road surface temperature has reached the previous notice standard, a prior notice for the icy road surface condition is displayed.

The invention cited in claim 8 provides operation (1):

(1) While a vehicle is traveling, a change in the road surface temperature is displayed relative to transient vehicular operational information (operating period, travel distance, air pressure, etc.). In consonance with the display data, an operator can predict a near future road surface temperature change for the current travel situation, and can make a prior evaluation of the presence of danger.

The invention cited in claim 9 provides operation (2):

(2) The prior notice standards, such as the inclination of a slope in a graph in the change in the detected road surface temperature, relative to the transient vehicular operational information, and the temperature of an icy road surface, are determined in advance. Therefore, a prior notice of an icy road surface can be displayed.

(D) It is a further object of the present invention to acquire a highly reliable running resistance for a vehicle.

According to the invention cited in claim 10, a vehicular information display apparatus, which employs vehicular operational information for a display, comprises: a detector, for detecting a travel speed; and a calculation unit, for performing regression analysis of a relationship between the travel speed of a vehicle and a travel distance, and for representing as a polynomial graph, on the display, the relationship between a running resistance, which is the result of the regression analysis, and the travel speed.

According to the invention cited in claim 11, in the invention cited in claim 10, the calculation unit calculates an estimated generated power for the vehicle and presents on the display the result of the calculation together with the travel distance.

The invention cited in claim 10 has the following operation (1):

(1) Since the relationship between the travel speed and the running resistance is acquired by performing regression analysis, a running resistance at a point other than the actual measurement point for a travel speed can be highly reliably acquired.

The invention cited in claim 11 has the following operation (2):

(2) Since the estimated generated power for a vehicle is displayed together with the running resistance for the vehicle, the ratio of the running resistance relative to the estimated generated power is indicated so as to reduce vehicular fuel consumption.

(E) It is a still further object of the present invention to accurately detect a degree of deterioration of lubricating oil, and to adequately display a time for the lubricating oil to be changed.

According to the invention cited in claim 12, an engine oil change period display device, which indicates on a display a period for changing engine lubricating oil, comprises: a detector for detecting a consumed fuel quantity; and a calculation unit for accumulating quantity of fuel to be used from the detected results of the detector and determining in advance a limiting quantity of fuel to be used that corresponds to a lubricating oil change period, and for exhibiting the lubricating oil change period on the display when accumulative consumed fuel quantity reaches the limiting quantity of fuel to be used.

The invention cited in claim 12 has the following operations (1) and (2):

(1) A degree of deterioration of lubricating oil (a change period) is detected from the quantity of fuel to be used that corresponds to an engine load, which closely correlates with the deterioration of a lubricating oil. That is, since the quantity of fuel to be used is not employed merely as a correction factor for detecting the degree of deterioration, the degree of deterioration of the lubricating oil can be detected accurately.

(2) When the engine is started while it is cold, the temperature of the lubricating oil is greatly changed, which causes deterioration of the lubricating oil. However, according to the present invention, the increase in fuel consumption is controlled when the engine is started while it is cold, and the accumulated fuel consumption for determining the degree of deterioration is acquired. As a result, the period for changing the lubricating oil can be displayed at an earlier time when the engine is started frequently while it is cold.

(F) It is still another object of the present invention to use a simple structure with which to promptly notify an operator of the occurrence of a specific vehicle sound.

According to the invention cited in claim 13, a vehicular audible sound detection device, which detects a specific sound that occurs during operation of a vehicle, comprises: a microphone installed in the vehicle; a bandpass filter for passing in a frequency band for the specified noise a signal extracted from a signal output through the microphone; and acoustic output means for reproducing the specific sound from a signal output by the bandpass filter and for outputting the specific sound.

According to the invention cited in claim 14, in the invention cited in claim 13, the acoustic output means includes a radio transmitter for transmitting the signal from the bandpass filter; and a radio receiver for receiving a signal transmitted by the radio transmitter, and for reproducing the specific sound from the signal and for outputting the specific sound.

According to the invention cited in claim 15, in the invention cited in claim 13 or 14, the bandpass filter has cutoff frequency change means.

According to the invention cited in claim 16, a vehicular audible sound detection device, which detects a specific sound that occurs during an operation of a vehicle, comprises: a microphone installed in the vehicle; a bandpass filter for passing in a frequency band for the specific sound a signal extracted from a signal output through the microphone; and a radio transmitter for transmitting the signal from the bandpass filter.

The invention cited in claim 13 has the following operation (1):

(1) With the simple structure that includes the microphone, the bandpass filter and the acoustic output means, a real, specific sound, such as the noise produced by a knock, that occurs in a vehicle can be transmitted to an operator, so that the operator is promptly notified of the occurrence of the specified sound.

Such a specific sound is not only the noise produced by a knock, but can also be an abnormal turbine noise produced by a supercharger, an abnormal noise produced by gear speed change, or an exhaust or intake noise. The specific sound is not limited to an abnormal sound at a specific engine location, and a normal sound can be employed as the specific sound.

The invention cited in claim 14 has the following operation (2):

(2) Since the radio transmitter and the radio receiver are used as the acoustic output means, a signal for a specific sound can be exchanged, for example, between the radio transmitter that is installed in an engine compartment and the radio receiver that is provided inside or outside the vehicle. Therefore, as it is not necessary for signal lines to be installed between the transmitter installation portion and the receiver installation portion, the structure of the device is simplified. Further, notification of the occurrence of the specific sound can be effected not only inside the vehicle but also at a remote area outside the vehicle.

The invention cited in claim 15 has the following operation (3):

(3) Since the cutoff frequency change means is included in the bandpass filter, the frequency band that is passed through (extracted by) the bandpass filter can be arbitrarily changed in consonance with a desired audible sound. By using the same device, several types of specific sounds (e.g., not only noise produced by a knock, but also abnormal turbine noise) can be selected.

The invention cited in claim 16 has the following operation (4):

(4) The extremely simple structure that includes only the microphone, the bandpass filter and the radio transmitter, and the radio receiver that is installed inside or outside the vehicle are used together. As a result, a real, specific sound, such as a knock, that occurs in the vehicle can be transmitted to an operator, so that he or she can be promptly notified of the occurrence of the specific sound.

BRIEF DESCRIPTION OF THE DRAWINGS

Fig. 1 is a block diagram illustrating one example vehicular information display apparatus;
Fig. 2 is a specific diagram illustrating analog screen displays;
Fig. 3 is a specific diagram illustrating a digital screen display;
Fig. 4 is a block diagram illustrating a display switching device;
Fig. 5 is a block diagram illustrating a warning display device;
Fig. 6 is a flowchart for warning display processing;
Fig. 7 is a specific diagram illustrating a screen whereon a warning standard is exhibited;
Fig. 8 is a specific diagram illustrating an overlapped warning screen display;
Fig. 9 is a block diagram illustrating a transient operational information display device;
Fig. 10 is a specific diagram illustrating a transient operational information screen display;
Fig. 11 is a block diagram illustrating a road surface temperature display device;

Fig. 12 is a flowchart for road surface temperature display processing;

Fig. 13 is a graph illustrating road surface temperature display modes;

Fig. 14 is a block diagram illustrating a running resistance display device;

Fig. 15 is a flowchart for running resistance display processing;

Fig. 16 is a specific diagram illustrating a running resistance screen display;

Fig. 17 is a block diagram illustrating a lubricating oil change period display device;

Fig. 18 is a flowchart for lubricating oil change period display processing;

Fig. 19 is a specific diagram illustrating a simulation screen display;

Fig. 20 is a specific diagram illustrating a fish list screen display;

Fig. 21 is a specific diagram illustrating a tropical fish map;

Fig. 22 is a flowchart for processing of a special movement by a tropical fish;

Fig. 23 is a specific diagram showing tropical fish;

Fig. 24 is a specific diagram showing tropical fish;

Fig. 25 is a specific diagram showing tropical fish;

Fig. 26 is a specific diagram showing tropical fish; and

Fig. 27 is a block diagram illustrating one example vehicular audible sound detector.

BEST PRACTICAL MODES OF THE INVENTION

[Vehicular information display apparatus]

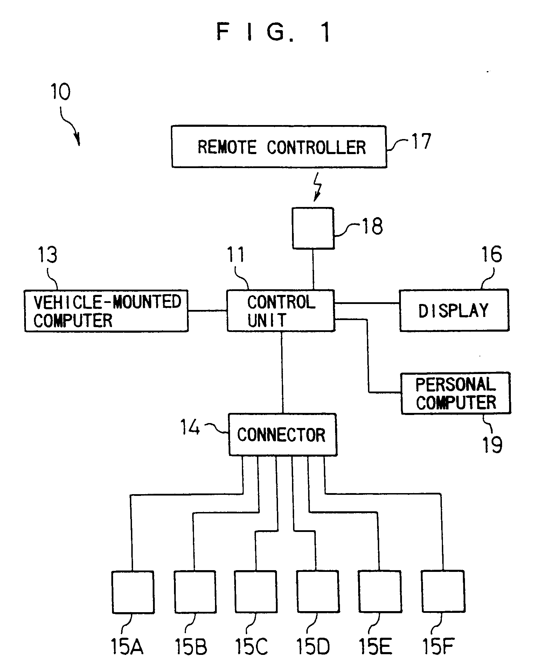

A vehicular information display apparatus 10 is installed in a vehicle and has a control unit 11 (a controller and a calculation unit), as is shown in Fig. 1. The control unit 11 is connected to a standard vehicle-mounted computer 13 via a power line, an injector signal line, a travel speed signal line and an engine revolution signal line, and receives various types of vehicular operational data. In the display apparatus 10, when selected by a user, a thermocouple temperature sensor 15A, a thermistor temperature sensor 15B, a pressure sensor 15C, an acceleration sensor 15D, an A/F (air/fuel ratio) sensor 15E and a current sensor 15F can be connected to the control unit 11. A display 16 (vehicle-mounted television), such as a liquid crystal display, a plasma display or a cathode ray tube, is connected to the control unit 11 to display the vehicular operational information.

In the display apparatus 10, a remote controller 17 is provided for the control unit 11, so that the control unit 11 can be arbitrarily operated by an operator through a remote control receiver 18.

Further, since the control unit 11 has a serial communication port, a personal computer can be connected to the control unit 11, and the vehicular operational information can be analyzed.

An explanation will now be given for the display apparatus 10 concerning (1) input signals, (2) an operational information (data) calculation method, and (3) a display method.

(1) Input signals

The standard vehicle-mounted computer 13 transmits the following signals 1) through 3) to the control unit 11:

1) Travel speed signal

2) Injection signals

For one of the injection signals, two revolutions of an engine constitute one cycle. To calculate the fuel flow rate for an ON signal period, an invalid fuel injection period must be subtracted from the ON signal period. The invalid injection period corresponds to time lag before fuel is actually injected after the signal is changed to the ON state. The invalid injection period is generally around 700 $\mu$sec, though it varies depending on power voltage, the structure of an injector, etc.

3) Engine revolution signal

For one cycle (two revolutions), the engine pulses equal the cylinder count.

The control unit 11 also receives detection signals from the previously described sensors 15A through 15F.

(2) Operational information calculation method

The control unit 11 calculates operational information (data) (2-1) and (2-2).

(2-1) Real time data

1) engine revolutions: Revolution (Nr)

The cycle for an engine revolution signal is measured and the engine revolutions are calculated.

$$\text{Revolution [rpm]} = 120 \times 10^{6}/(Tr \times Nc)$$

Tr: revolution signal period
Nc: engine cylinder count

2) fuel flow rate: Fuel

The total ON period for the injection pulse (hereinafter referred to as an "IP") of one engine cycle (two revolutions) is measured, and the momentary flow rate for fuel is calculated.

$$\text{Fuel [cc/min]} = (Ti - (Tn + Tm) \times Ci) \times (Nr/120) \times 10^{-6} \times Vi \times Nc \times Qi$$

Ti: IP ON period [$\mu$sec]
Tn: invalid injection period 700 $\mu$sec
Tm: input interface hard delay correction value
Ci: injection count (IP leading edge is counted)
Vi: injector capacity [cc/min]
Nr: engine revolution [rpm]
Qi: fuel correction value

3) travel speed: Speed

The frequency for the travel speed pulse is 30 to 80 Hz at 100 km/h (differs by vehicle type). The signal cycle is detected and the travel speed is calculated.

$$\text{Speed [km/h]} = (1/Ts) \times 10^{-6} \times Ks \times Qs \times 100/70$$

Ts: detected speed signal cycle [$\mu$sec]
Ks: speed signal set value (1 or 2)
Qs: speed correction value
100/70: 35 Hz or 70 Hz at 100 km/h for most of vehicles

4) fuel expense: Cost

Momentary fuel expense is calculated based on Fuel and Speed.

$$\text{Cost [km/l]} = \text{Speed}/(\text{Fuel} \times (60/1000))$$

5) injector valve opening rate: Injector

The injector valve opening ratio (ON Duty of the IP) in one engine cycle is acquired.

$$\text{Injector [\%]} = (Ti - Tm \times Ci) \times 10^{-6} \times Nr/120.$$

6) acceleration: Acceleration

Vertical G is calculated from a change in speed.

$$\text{Acceleration [G]} = \Delta \text{Speed}/ \Delta t$$

7) running resistance: Friction

The running resistance (power loss) is calculated using the vehicle weight and the negative acceleration during inertial travel.

$$\text{Friction [ps]} = (Mn + Mf) \times \alpha / g \times Vs \times 0.01333$$

Mn:    vehicle weight [kg]
Mf:    inertial weight [kg] produced by revolutions during inertial running, 0.05 Mn
$\alpha$ :    absolute value of acceleration [m/s$^2$]
g:    9.8
Vs:    travel speed [km/s]

Regression analysis (three-order expression) is performed for the relationship between the obtained Friction, and the speed and the results are shown as graphs.

8) output power: Power

A running resistance for an arbitrary speed is acquired from the above three-order expression, and is added to an acceleration resistance to obtain the real time output power.

$$\text{Power [ps]} = \text{Friction}_t + (Mn + Ma) \times \alpha / g \times Vs_t \times 0.01333$$

Friction$_t$:    Friction at speed Vs$_t$
Ma:    inertial weight produced by revolutions during normal running, 0.08 Mn

(2-2) Past time data

1) elapsed time: Time

The time that has elapsed since the last Reset is measured.

2) travel distance: Distance

The total number of pulses are counted and the total travel distance is obtained.

$$\text{Distance [km]} = 100 \times \int Cs \times Ks \times Qs/(70 \times 60^2)$$

$\int$Cs:    total pulse count

3) fuel consumption: Fuel

The times for the injector valve open periods are added together to acquire the total fuel consumption.

$$\text{Fuel [l]} = (\int Ti - (Tn+Tm) \times \int Ci) \times Vi \times Nc \times Qi \times 10^{-9}/60$$

$\int$Ti:    total time for the injector valve open periods [$\mu$sec]
$\int$Ci:    total injection count

4) average fuel expense: Cost

The average fuel expense is calculated from using Distance and Fuel.

$$\text{Cost [km/l]} = \text{Distance/Fuel}$$

5) average travel speed: Speed

The average travel speed is calculated using Distance and Time.

$$\text{Speed [km/h]} = \text{Distance/Time}$$

### (3) Display method

In accordance with (3-1) and (3-2) below, the control unit 11 selectively displays, on the display 16, (2-1) Real time data and (2-2) Past time data, or values detected by the standard vehicle-mounted computer 13 and the sensors 15A through 15F.

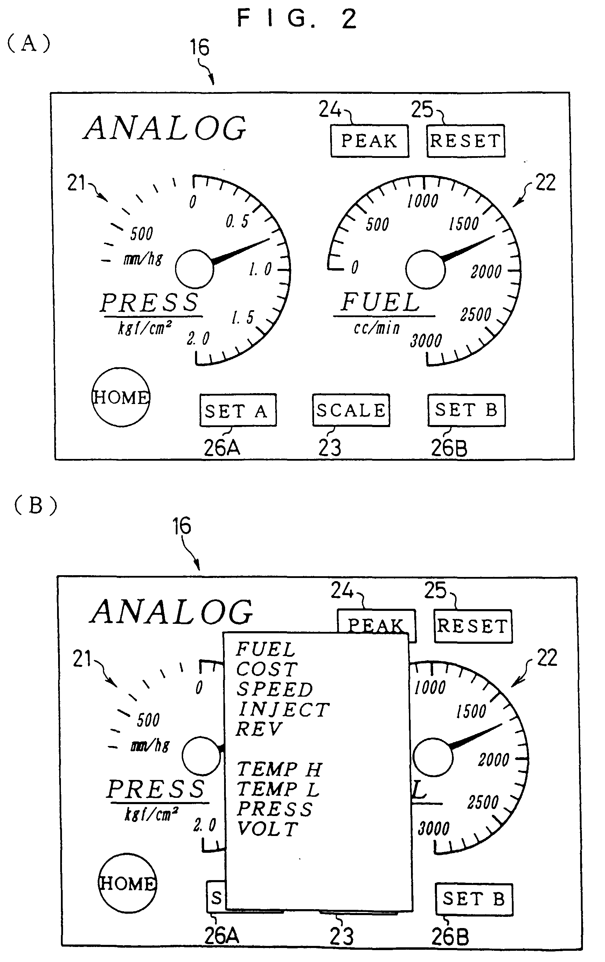

### (3-1) Analog display (Fig. 2)

An analog meter that corresponds to selected data is displayed on the display 16. Two analog meters 21 and 22 are displayed at the same time on the display 16. Three or more analog meters can be displayed at the same time. The scales for the analog meters 21 and 22 are changed by depressing a scale button 23. The peak values for the analog meters 21 and 22 are displayed by depressing a peak button 24. The peak values are reset by depressing a reset button 25.

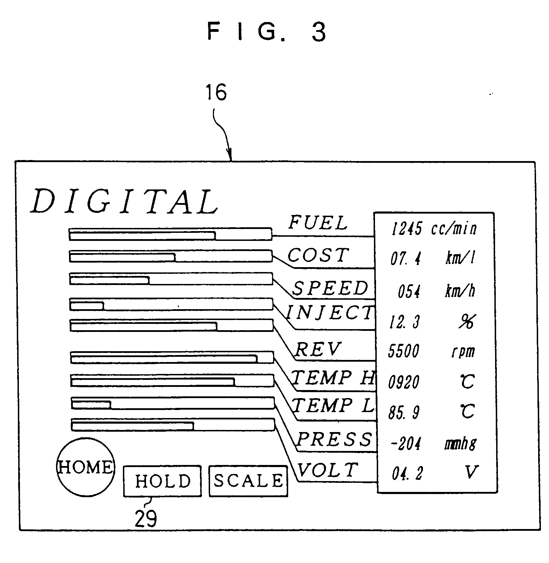

### (3-2) Digital display (Fig. 3)

All of the data (or selected data) are shown in real time on the display 16 by using a bar graph and numerals. When a hold button 29 is depressed, data are held. When the hold button 29 is depressed again, the data are changed to correspond with the operating condition.

The control unit 11 can provide sounds (an acoustic display), such as an opening sound, a screen switching sound, an alarm sound, a sound for indicating a fish being critically ill, a sound for indicating the death of a fish, a sound for a fish eating, a squirting sound, and a flying sound for a fish.

An explanation will now be given for display modes of the vehicular information display apparatus 10: (A) display switch mode, (B) warning display mode, (C) transient operational information display mode, (D) road surface temperature display mode, (E) running resistance display mode, (F) lubricating oil change time display mode, and (G) simulation display mode.

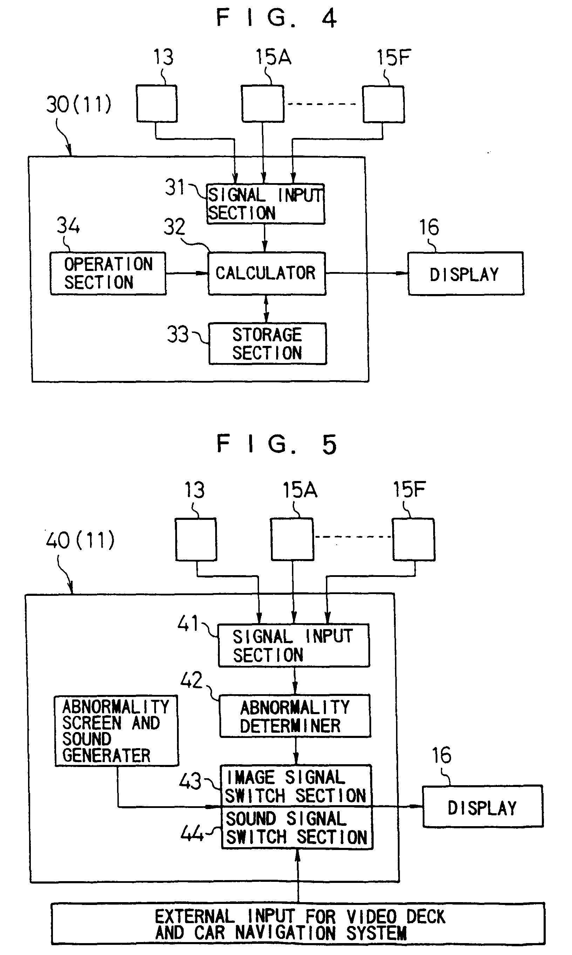

### (A) Display switch mode (Fig. 4)

The control unit 11 serves as the display switch device 30. The display meters for operational information items are calculated, using the signals from the standard vehicle-mounted computer 13 and the sensors 15A through 15F, by (2) Operational information calculation method, as previously described. The obtained display data are selected by an operator and the selected display data are displayed on the display 16. That is, various types of data can be shown on the display 16 using the same display method, and the displayed articles and memory values can be varied in consonance with the data.

As is shown in Fig. 4, the display switch device 30 comprises: a signal input section 31, for fetching signals that are detected by the standard vehicle-mounted computer 13 and the sensors 15A through 15F; a display data calculation section 32; a storage section 33; and an operation section 34.

In the display apparatus 10, therefore, as is shown in Fig. 2, when the set A button 26A and the set B button 26B are depressed, a list for setting data is displayed (Fig. 2(B)), and desired data can be selected. The set A button 26A is used to select the analog meter 21 on screen A (left screen) of the display 16, and the set B button 26B is used to select the analog meter 22 on screen B (right screen) of the display 16.

According to the display switch mode in this embodiment, the following operation (1) is provided.

(1) Data for a plurality of operational information items can be selectively switched and displayed on the display 16. Thus, without requiring a plurality of meters, a plurality of operational information items can be shown on a single display 16. Since the display 16 of the consistent design and display form is used to represent operational information items, the display can be more discernible.

### (B) Warning display mode (Figs. 5 through 8)

The control unit 11 serves as a warning display device 40, and determines in advance a warning standard for a specific operational information item for a vehicle. When data for the specific operational information item correspond with the warning standard, a warning is displayed for that information item. An operator is thereby informed of the occurrence of an abnormality.

As is shown in Fig. 5, the warning display device 40 comprises: a signal input section 41 (the same as the signal input section 31 of the display switch device 30), for fetching signals that are detected by the standard vehicle-mounted computer 13 and the sensors 15A through 15F; and an abnormality determines 42. To display a warning in consonance with the determination provided by the abnormality determiner 42, the warning display device 40 has an image signal switch section 43 for switching screens on the display 16, and a sound signal switch section 44 for switching sounds produced by the display 16.

In other words, to display a warning, the warning display device 40 displays a warning screen on the display 16 by using the automatic operation of the image signal switch section 43, and outputs a warning sound, e.g., a buzzer sound, by using the automatic operation of the sound signal switch section 44.

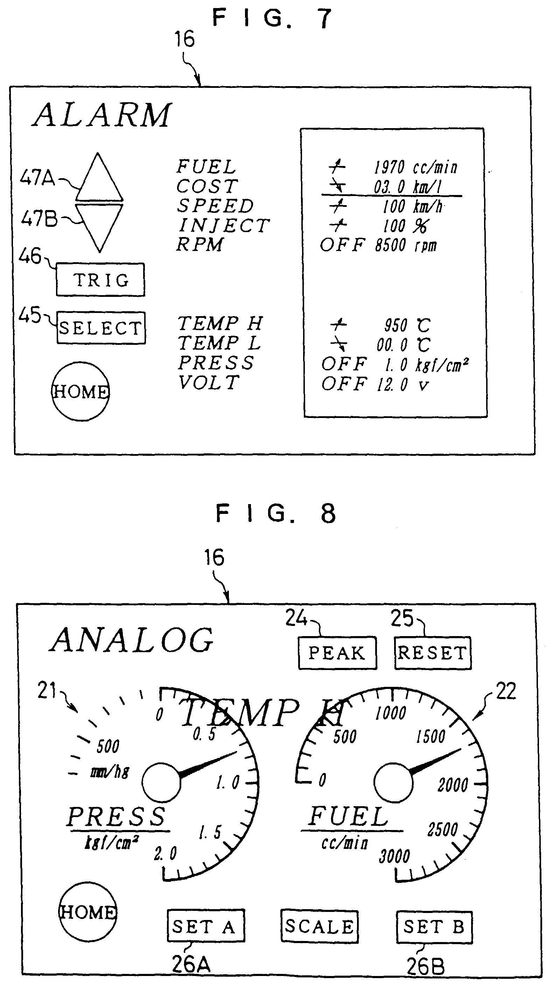

The control unit 11 sets a warning standard for the operational information items in a warning set screen (Fig. 7) on the display 16. When the select button 45 is depressed, a cursor bar is moved from beneath one article to the next, one by one. When a trigger button 46 is depressed, high trigger (a warning is to be issued at a warning standard or higher; e.g., fuel flow rate: Fuel), low trigger (a warning is to be issued at a warning standard or lower; e.g., fuel expense: Cost), or warning off can be selected. The warning standard (threshold value) is set by using up and down buttons 47A and 47B.

Display of a warning on the display 16 is performed as is described in (1) through (4).

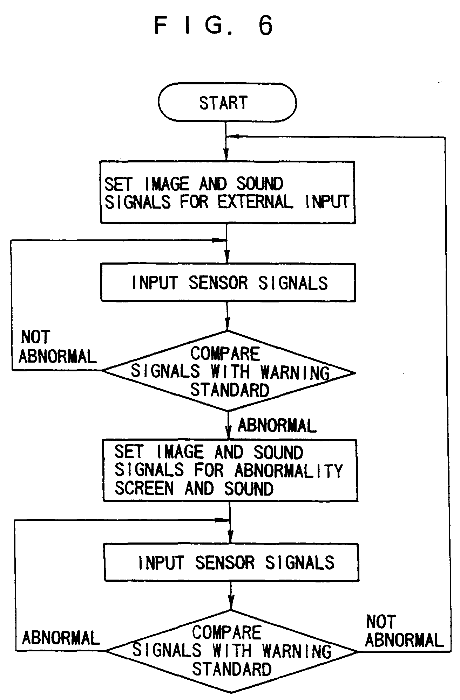

(1) When either operational information image A or B (e.g., supercharging pressure: Press; or fuel flow rate: Fuel) is shown in the display 16 (as an analog or a digital representation), and when the data for operational information image C (e.g., temperature: Temperature) are the equivalent of those for the warning standard, a warning is displayed with regard to the operational information image C (Fig. 6).

(2) The warning display in (1) may be effected by using a method whereby the previous screen display of the operational information image A or B on the display 16 is interrupted or halted, and is exchanged for a warning display screen displaying the operational information image C, or by using the method (Fig. 8) whereby a warning display for the operational information image C overlaps the previous display screen for the operational information image A or B on the display 16.

(3) When analog data are displayed on the display 16, the image C, which is used to indicate the occurrence of an abnormality, blinks. If there are a plurality of images C and D for abnormalities, warnings are displayed for these images C and D.

(4) When digital data are displayed on the display 16, the bar graph and/or numerals of the image C for an abnormality are displayed in red.

(5) When either analog data or digital data are displayed on the display 16, the previously described acoustic representation (e.g., a buzzer sound) is performed in conjunction with the screen display for (1) to (4).

Therefore, the warning display mode for this embodiment has the following operations (1) and (2).

(1) For an abnormal occasion where the display data for a specific operational information item are the equivalent of those for the warning standard, a warning is issued by using either an image or a sound. Notification of the occurrence of a vehicular abnormality is provided for an operator within a short time, so that the operator can accurately and easily understand the details concerning the abnormality (the area affected by the abnormality).

(2) The warning display in (1) overlaps the screen display for the operational information item that was selected and displayed immediately before. Therefore, an operator can immediately ascertain that a vehicular abnormality has occurred, while at the same time being able to refer to the display data for the selected operational information item.

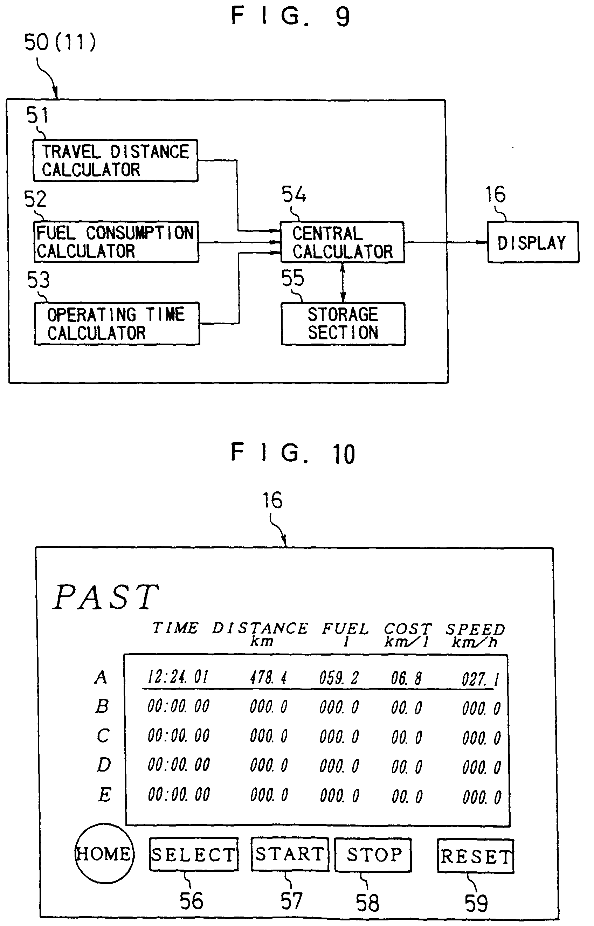

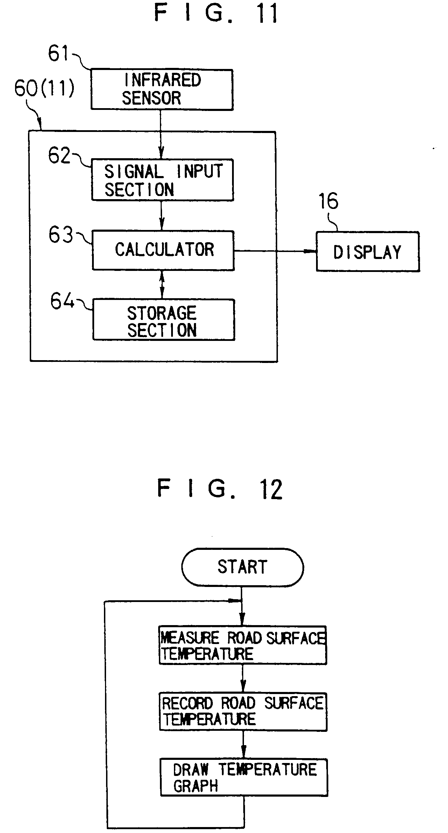

(C) Transient operational information display mode (trip mode) (Figs. 9 and 10)

The control unit 11 displays, on the display 16, transient operational information (trip data) that covers an arbitrary operation period for a vehicle.

The control unit 11, which serves as a transient operational information display device 50, calculates (or detects) sets of transient operational data that correspond to vehicular operational information items, and displays on the display 16 a set of the transient operational data for a specific operating period. At this time, the control unit 11 displays, on the display 16, sets of transient operational data for a plurality of operating periods.

As is shown in Fig. 9, the transient operational information display device 50 (a trip display device) includes a plurality of three-calculator (or detector) sets, each comprising: a travel distance calculator 51, for calculating (or detecting) a travel distance; a fuel consumption calculator 52, for calculating (or detecting) fuel consumption; and an operating time calculator 53, for calculating (or detecting) an operating time. The calculators 51 through 53 employ the operational information calculation method in above-mentioned (2).

The calculators 51 through 53 of each set calculate a travel distance, fuel consumption and an operating time as transient operational data for each of the specific operating periods A, B, C, D and E, and transmit the results to a central calculator 54. The central calculator 54 calculates an average fuel expense and an average travel speed as transient operational data for the operating periods A through E. The resultant transient operational data is stored in a storage section 55.

The control unit 11 displays, in parallel on the display 16 for each of the operating periods A through E, an operating time (Time), a travel distance (Distance), fuel consumption quantity (Fuel), an average fuel expense (Cost) and an average travel speed (Speed) as the transient operational data that is obtained by the transient operational information display device 50 (Fig. 10). Channels A through E for operation periods can be turned on by using a select button 56. A plurality of channels A through E can be turned on at the same time, or a plurality of channels can be independently used. While touring or commuting, the transient operational data for a selected channel can be displayed. The display of the transient operational data for the selected channel can be arbitrarily started, stopped and reset by using a start button 57, a stop button 58 and a reset button 59.

Thus, the transient operational information display mode of this embodiment has the following operation (1).

(1) A set of transient vehicular operational data (a travel distance, an average fuel expense, an operating time, etc.) can be displayed for each of a plurality of operation periods. Many phases of the transient vehicular operating state can be evaluated. For example, travel distances, average fuel expenses and operating hours can be compared for different routes to the same destination, or when a plurality of operators handle the same vehicle, travel distances, average fuel expenses and operating hours can be compared.

(D) Road surface temperature display mode (Figs. 11 through 13)

The vehicular information display apparatus 10 has an infrared sensor 61 for detecting (sequentially monitoring) the temperature of a road surface while moving. The control unit 11, which serves as a road surface temperature display device 60, displays, on the display 16, a change in the road surface temperature, which is detected by the infrared sensor 61, relative to the transient vehicular operational data.

As shown in Fig. 11, the road surface temperature display device 60 comprises: a signal input section 62, for fetching a detection signal from the infrared sensor 61; and a transient operational data calculator 63, for calculating (or detecting) transient operational information, such as an operating time, a travel distance and air pressure. The results of the calculations (or detections) are stored in a storage section 64.

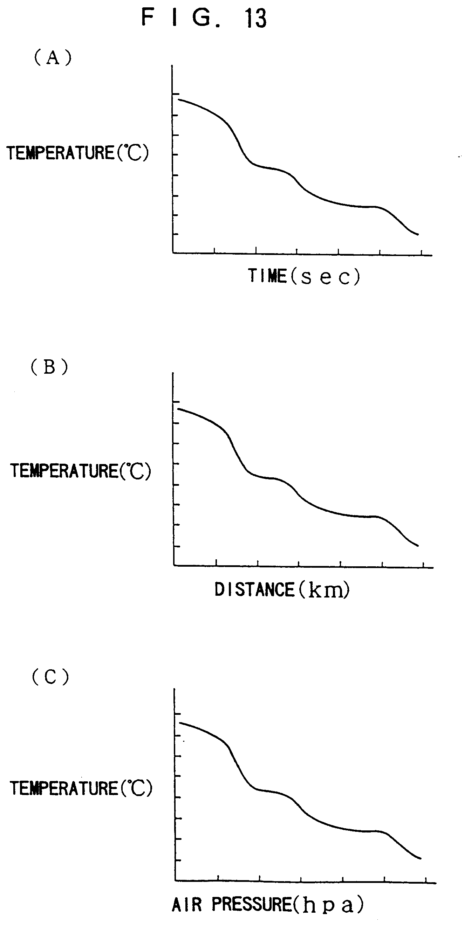

The road surface temperature display device 60 uses a graph to exhibit, on the display 16, the transient operational data obtained by the calculator 63, and the road surface temperature detected by the infrared sensor 61 (Fig. 12). In the graph, the vertical axis represents the road surface temperature and the horizontal axis represents an operating time (Fig. 13(A)), a distance travelled (Fig. 13(B)), and air pressure (Fig. 13(C)). While moving, an operator monitors changes in the road surface temperature relative to the operating time, to the distance travelled, and in the air pressure (height), and can predict icy road surface conditions by referring to the inclination of a slope in the graph and the road surface temperature.

The road surface temperature display device 60 determines in advance a warning standard (can be specified by the inclination of a slope in a graph, or a road surface temperature) for an advance notice of icy road surface conditions that are related to changes in the detected road surface temperature. When the change in the detected road surface temperature is that represented by the warning standard for an advance notice, the advance notice warning for an icy road surface can be displayed.

The road surface temperature display mode for this embodiment has the following operations (1) and (2).

(1) While a vehicle is moving, a change in the road surface temperature that is related to transient vehicular operational information (a travel period, a travel distance, air pressure, etc.) is displayed. In accordance with this, an operator can predict a road surface temperature change that will occur in near future under the current traveling conditions, and can decide in advance whether any danger exists.
(2) The warning standard, such as a change in the inclination for the detected road surface temperature relative to the transient vehicular operational information and the temperature of an icy road surface, is determined in advance. Therefore, an advance warning for an icy road surface can be displayed.

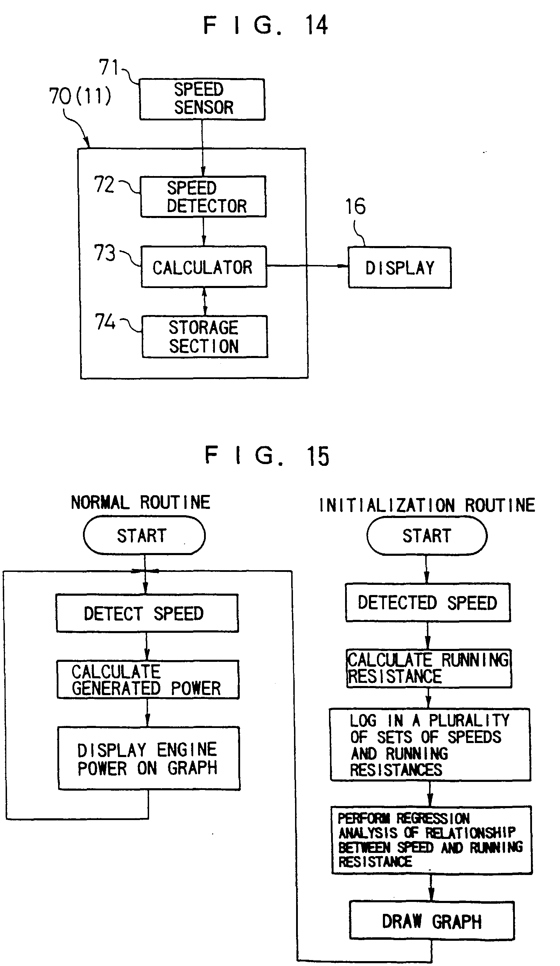

(E) Running resistance display mode (Figs. 14 through 16)

The vehicular information display 10 has a speed sensor 71 for detecting the speed of a vehicle. The control unit 11, which serves as a running resistance display device 70, performs regression analysis of a relationship between a speed and a running resistance. The control unit 11 displays, on the display 16, the running resistance obtained as a result of the regression analysis, and also a running resistance that corresponds to the speed that is detected by the speed sensor 71.

As is shown in Fig. 14, the running resistance display device 70 comprises: a speed detector 72 for fetching the result detected by the speed sensor 71; and a calculator 73 for performing regression analysis of a relationship between the speed and a running resistance. The result is stored in a storage section 74.

The calculator 73 calculates running resistance (Friction) by using the following expression, that was previously described in (2-1), real time data, in (2), operational information calculation method:

$$\text{Friction [ps]} = (Mn + Mf) \times \alpha /g \times Vs \times 0.01333$$

Mn: vehicle weight [kg]
Mf: inertia weight [kg] during inertial running, 0.05 Mn
$\alpha$: absolute value of acceleration [m/s$^2$]
g: 9.8
Vs: travel speed [km/s]

The procedures for displaying a running resistance are as follows (Fig. 15).

(1) When a vehicle has been accelerated and has attained a specific speed, the gears are shifted to neutral to perform inertial movement.
(2) $\Delta V$ (speed change; negative acceleration) during $\Delta T$ is acquired, and a running resistance is calculated for $\Delta V$ and the speed by using the above expression.
(3) A plurality of sets consisting of a running resistance and a corresponding speed are logged in, and regression analyses of the relationships between the speeds and the running resistances are performed. An expression reflecting their relationship is thus acquired and is represented in a two-dimensional graph.

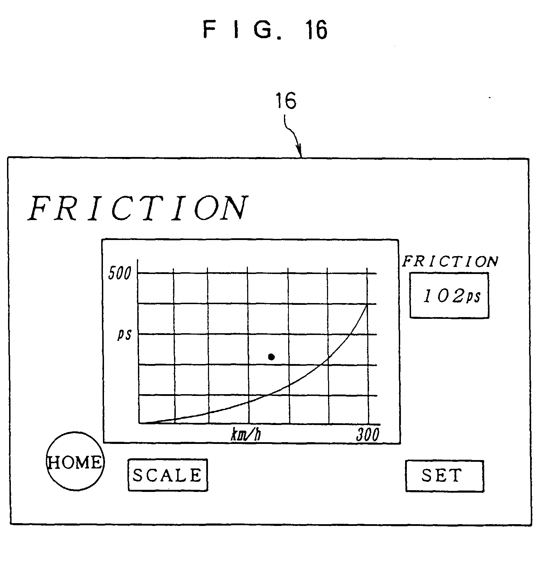

The running resistance display device 70 also uses the calculator 73 to calculate the estimated power for the vehicle, and displays the result, together with the running resistance, on the display 16 (Fig. 16).

The calculator 73 calculates the estimated power (Power) by using the expression that was previously described in (2-1), real time data, in (2), operational information calculation method.

$$\text{Power [ps]} = \text{Friction}_t + (Mn + Ma) \times \alpha /g \times Vs_t \times 0.01333$$

Friction$_t$: Friction at speed Vs$_t$
Ma: inertial weight [Kg] produced by inertial revolutions during normal running, 0.08 Mn

The procedures for displaying the estimated power are as follows (Fig. 15).

(1) The speed of a vehicle is detected, and estimated power is calculated for the speed and the weight of the vehicle by using the above expression.
(2) The estimated power is displayed in real time in the running resistance graph. At this time, a current running resistance ("102 ps" in Fig. 16) shown on the screen of the display 16 is a digital value.

The running resistance display mode for this embodiment has the following operations (1) and (2).

(1) Since the relationship between the speed of a vehicle and the running resistance is calculated by performing regression analysis, a highly accurate running resistance can be acquired for a point other than the point at which the speed was actually measured.
(2) Since the estimated power for a vehicle is displayed with the running resistance, the ratio of the running resistance to the estimated power is shown and a savings in fuel expense for the vehicle can be realized.

As is described above, the ratio of the running resistance to the current estimated power is understood (at low speed, the running resistance for a vehicle is mainly affected by the rolling resistance of wheels or a mechanical loss on gears, etc., while at high speed, the running resistance is affected by air resistance), and the economical speed, the aerodynamic characteristics, and the estimated highest speed of a vehicle can be ascertained.

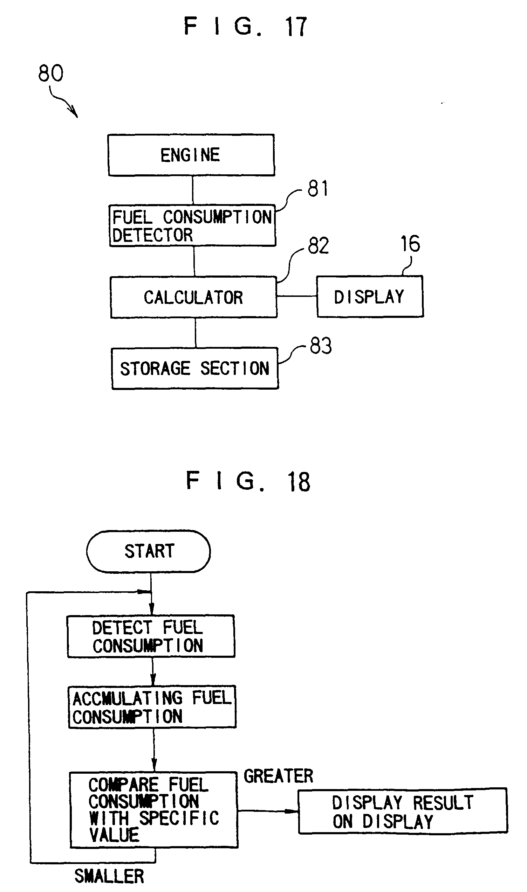

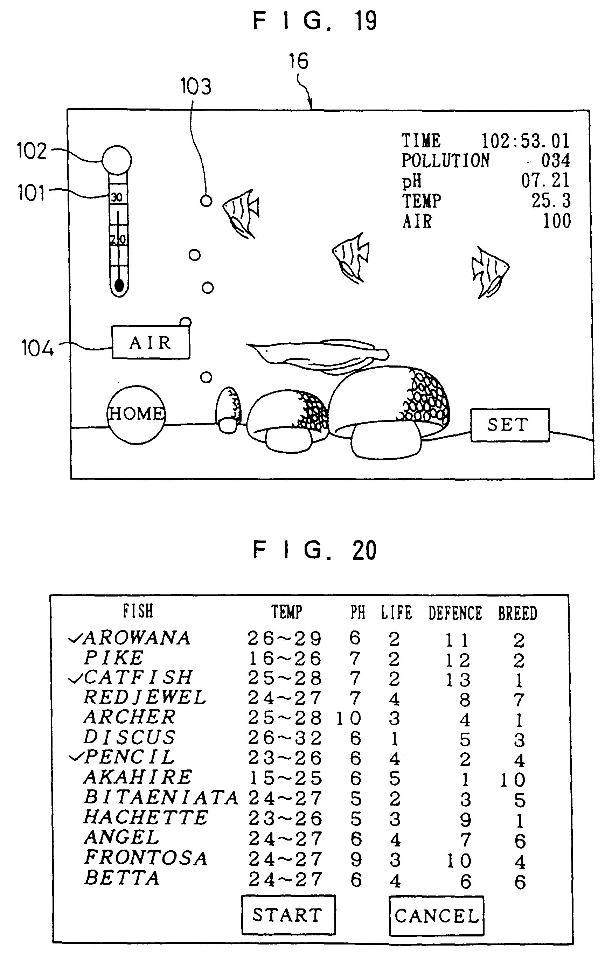

(F) Lubricating oil change time display mode (Figs. 17 and 18)

The control unit 11, which serves as a lubricating oil change time display device 80, displays on the display 16 the time for changing the lubricating oil in an engine.

As is shown in Fig. 17, the lubricating oil change time display device 80 comprises: a fuel consumption detector 81, for detecting (calculating) a fuel injection quantity for one engine cycle (a momentary fuel injection quantity); and a calculator 82, for calculating a total for those fuel consumption quantities that are detected by the fuel consumption detector 81, for determining in advance the fuel consumption limit that corresponds to a lubricating oil change time and storing it in a storage section 83, and for displaying the lubricating oil change time on the display 16 when the cumulative fuel consumption quantity equals the limit.

Display by the lubricating oil change time display device 80 of the time for changing lubricating oil is performed as is described in (1) through (3) below (Fig. 18).

(1) The fuel consumption detector 81 detects a momentary fuel injection quantity. The detection by the fuel consumption detector 81 is performed based on the valve open time for a fuel injector. The detector 81 measures the total ON period for the injection pulses during one engine cycle, and calculates the momentary fuel consumption by using the following expression.

$$\text{momentary fuel consumption} = (Ti - (Tn + Tm) \times Ci) \times (Nr/120) \times 10^{-6} \times Vi \times Nc \times Qi \ [cc/min]$$

Ti: injection pulse ON period [$\mu$sec]
Tn: invalid injection period
Tm: input interface hard delay correction value
Ci: injection count
Vi: injection capacity [cc/min]
Nr: engine revolutions [rpm]
Qi: fuel correction value

According to this method, which is employed by the fuel consumption detector 81, since Ti, Ci and Nr can be obtained from the standard vehicle-mounted computer 13, a consumed fuel quantity can be easily and accurately calculated without the requirement for other, special detection means.

(2) Based on the momentary injected fuel quality detected by the fuel consumption detector 81, the calculator 82 calculates the total quantity of fuel that is consumed. For the calculation of the total quantity of fuel that is consumed, the calculator 82 employs the following expression that was previously described in (2-2), past time data, and in (2), operational information calculation method. total fuel consumption = $(\int Ti - (Tn + Tm) \times \int Ci) \times Vi \times Nc \times Qi \times 10^{-9}/60$ (liter)

$\int Ti$: total injection pulse opening period [$\mu$sec]
$\int Ci$: total injection count
Nc: engine cylinder count

(3) The vehicle fuel consumption total that is obtained by the calculator 82 is compared with the fuel consumption limit that is stored in advance in the storage section 83. When the fuel consumption total equals the fuel consumption limit, it is ascertained that the lubricating oil has been deteriorated, and the display 16 is used to inform an operator that it is time to change lubricating oil.

The fuel consumption limit for a vehicle is determined as is shown in Table 1 in consonance with the engine type (exhaust amount, presence or absence of a supercharger, etc.). When, as a result of the comparison, it is found that the fuel consumption total is equal to or greater than the fuel consumption limit, it is ascertained that the deterioration of the lubricating oil exceeds the permissible degree of deterioration.

The lubricating oil change time display mode of this embodiment has the following operations (1) and (2).

(1) A degree of deterioration (a change period) of lubricating oil is detected using the quantity of fuel to he used that corresponds to an engine load, which is closely correlated with the deterioration of lubricating oil. That is, since the quantity of fuel to be used is not employed merely as a correction factor for detecting the degree of deterioration, the degree of deterioration of the lubricating oil can be detected accurately.

(2) When the engine is started while cold, the temperature of the lubricating oil is greatly changed, and deterioration of the lubricating oil occurs. However, according to the present invention, an increase in fuel consumption is controlled when the engine is started while it is cold, and the total quantity of the fuel consumed, which is required for determining the degree of deterioration, is acquired. As a result, the period for changing the lubricating oil can be displayed earlier, relative to the frequent starting of the engine.

That is, deterioration of the lubricating oil is determined by using a displayed fuel quantity that is closely correlated with engine load and lubricating oil temperature, which together have the greatest effect on engine deterioration. A simple structure can be used to precisely detect the time for performing a lubricating oil change.

(G) Simulation display mode (Figs. 19 through 26)

The vehicular information display apparatus 10 displays the condition of a simulation (an animate creature, such as a tropical fish, an inanimate object, such as space, etc.) on the display 16 to simulate the vehicular operational information. The control unit 11 detects or calculates the vehicular operational information, as was previously described, converts the information into a condition affecting the simulation, or a change in a natural phenomenon, and displays the changed condition of the simulation on the display 16.

In this embodiment, an explanation will be given by using a virtual aquarium wherein tropical fish in a virtual water tank are displayed as animate creatures on a screen on the display 16.

More specifically, as is shown in Fig. 19, a virtual water tank is displayed on the screen of the display 16, and the running data for a vehicle are reflected by the various environmental conditions in the water tank. The environment in the water tank is changed in accordance with the running condition of the vehicle. The characteristics (appropriate temperature, pH limit, recuperative power, reproductive capability, and defensive strength) of tropical fish in the water tank are set in advance, and depend on the fish types. The conditions under which fish are raised varies in consonance with the environmental changes in the water tank. Some fish that can not cope with a new environment in the water tank may die, while the other fish may breed. When an operator monitors a change in the environment in the water tank, or in the condition of the animate creatures, the visual effects or audio effects relative to the display of the vehicular operating condition are enhanced, and it is more interesting and enjoyable for an operator to look at when ascertaining the vehicular operating condition.

A simulation display mode will now be described in detail.

(G-1) Setting of simulation display mode

A template is displayed by the depression of a Set button, and an engine type and a temperature setting are entered. A type of fish for breeding is selected by depressing a Fish button. A Restart button is depressed to begin the breeding of the fish.

(1) Engine type

A user sets an engine type for his, or her, vehicle (Table 1). This parameter is closely related to the contamination of water in the tank (degree of deterioration of lubricating oil).

(2) Temperature

The water temperature in the water tank is set.

(3) Water change

Water in the water tank is changed. A user performs this operation when the oil is changed.

(4) Fish (Fig. 20)

The list of fish in Fig. 20 is displayed by depressing the Fish button, and a desired fish type is selected thereafter. A template for confirmation appears when the Restart button is depressed. With the depression of Yes, fish raising is begun. For each fish type, appropriate temperature (Temp), the pH limit, a breeding level (Breed), recuperative power (Life), and defensive strength (Defense) are specified. Each fish has a degree of growth (Growth), and the Growth for each fish when it begins to breed is set to level 3 of the levels 1 through 5. When the raising conditions are good, the level Growth is increased, and accordingly, the length of the displayed fish increases. For each fish type, the gender identification and Health are parameters that a user does not know. Health is an integer of between 5 and 10, and is assigned at random to fish at Restart or at hatching.

(G-2) Fish lifetime

(1) Growth and hatching

The growth level (Growth) for any fish begins at level 3 at Restart. The fish grows according to the value for Breed, which indicates the ease of the growth, with the Growth level being incremented by one. Incrementing of the Growth level is performed when the following condition is satisfied.

$$Tg \text{ [sec]} > 36000 \text{ [sec]/Breed}$$

Tg: continuous period during which the fish does not fall into a critically ill condition.

When the fish falls into a critically ill condition during the count for Tg, Tg is reset and the count begins again.

When the fish grows to Growth 5, a lottery of Breed/10 is held, and a winning female fish spawns. When Tg is again satisfied, regardless of the result of the lottery, the lottery is again held to determine whether spawning should be performed. Four chances are given to each fish. When a female fish fails to draw a winning number in the lottery four times, it is assumed that it is unable to spawn and it spends the rest of its life without spawning. It should be noted that this lottery is performed only when there is a male fish at the level Growth 5.

One to three eggs are hatched at one time, the number of eggs being determined each time by lottery.

An egg is set at Growth 0, and after attaining Growth 1, a fish grows according to the following format:

Growth 1:    1/5 of Growth 5
Growth 2:    2/5 of Growth 5
Growth 3:    3/5 of Growth 5
Growth 4:    4/5 of Growth 5

The size at Growth 5 corresponds to Size for the tropical fish characters in Table 2.

(2) Critically ill condition

A fish encounters various obstacles during its growth. More specifically, the control unit 11 determines in advance the obstacle standard a fish must cope with when the operating condition of a vehicle deteriorates (the environment in the water tank is changed). When the deterioration of the operating condition exceeds the obstacle standard, the displayed fish is critically ill (almost dead). A blinking halo appears above the fish, and the playing of a melody for the critically ill fish is begun. When an operator so handles the vehicle that its operating condition is improved, the fish is saved from the imminent death.

(3) Death

When the critically ill state continues, the fish finally dies. The fish disappears from the screen and the playing of a melody for the deceased is begun.

(G-3) Environment in water tank

The control unit 11 changes the environment in the water tank as follows, in accordance with the vehicular operating condition.

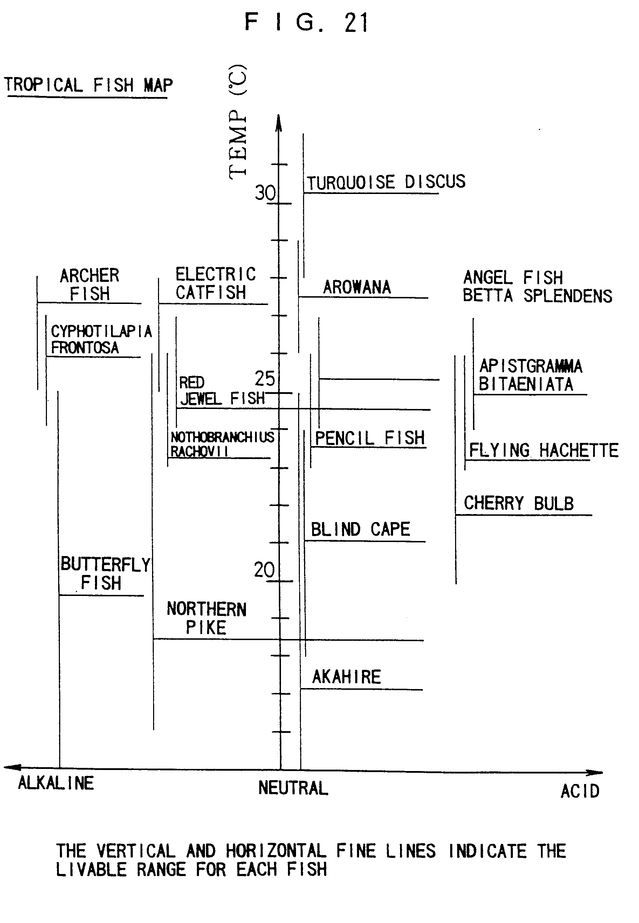

(1) Water temperature (Fig. 21)

The control unit 11 increases the water temperature in the water tank when the vehicle is running with a heavy load (for example, the degree of opening of the injector is 30% or greater). The control unit 11 also determines in advance a livable water temperature for each fish as an obstacle standard for high-load running (Fig. 21).

That is, when the valve opening ratio for an injector is equal to or greater than a set value (e.g., 30%), the water temperature is increased. When the valve opening ratio is reduced until it is less than the set value, the water temperature is also reduced.

A fish for which the water temperature is higher or lower than a livable temperature becomes critically ill. The fish dies when the time To, during which a temperature other than a livable temperature is continued, satisfies the following condition:

$$To [sec] > Life \times Growth \times Health$$

In this fashion, an operator is notified during a high-load operation that an abnormality has occurred, and the operator is able to initiate action to save fuel.

(2) pH (Fig. 21)

As was previously described in (2-2), Past time data, in (2), Operational information calculation method, the control unit 11 calculates the average fuel expense using the travel distance and the total fuel injection quantity, and uses the pH value to represent it in the water tank. Further, the control unit 11 determines in advance the pH limit (Fig. 20) for each fish as the obstacle standard relative to the fuel expense (Fig. 21).

More specifically, the value of the pH in the water tank is changed by using the average fuel expense. When the average fuel expense is not satisfactory, the water in the tank becomes acid. Fishes that prefer an alkaline environment do not spawn, and the fishes that can be raised are limited. When the pH value in the water tank exceeds the pH limit for all the fish, all the fish fall critically ill. The fish die when the following condition is satisfied.

$$pH \text{ in water tank} > pH \text{ limit} \times (1 - Life \times Growth \times Health/1000)$$

In this fashion, an operator is notified that the fuel expense is not satisfactory, and the operator can initiate action to save the fuel while travelling.

(3) Water contamination

As is described in (F), lubricating oil change time display mode, the control unit 11 represents the deterioration of the engine oil (lubricating oil), which is determined by referring to vehicular fuel consumption, as the degree of contamination of the water in the water tank. In addition, the control unit 11 determines in advance the livable degree of water contamination for each fish (fuel consumption limit) as an obstacle standard for each engine type (Table 1).

More specifically, the contamination in the water tank is varied depending on fuel consumption, and represents the deterioration of engine oil. A limit value in Table 1 is set for each vehicle engine type (exhaust quantity, the presence or absence of a supercharger, etc.). When the fuel consumption exceeds the limit, all of the fish in the water tank fall critically ill, and they start dying, beginning with the fish having the least recuperative powers. It should be noted that the fish die when the following condition is satisfied.

$$Life \times Growth \times Health + Limit < \text{fuel consumption [I]}$$

As an exception, when the degree of contamination exceeds the limit for a bitaeniata, a blinking halo appears above the bitaeniata and it dies 30 seconds later. Even if the water is changed during this period, it is assumed that it is too late. Using this process, the deterioration of the engine oil, and the oil change time can be easily identified.

(4) Air

The supply of air in the water tank is represented by bubbles. When the speed sensor is detecting the speed of the vehicle, air is supplied to the water tank. When the vehicle is stopped or when detection of the speed is not being performed (i.e., unnecessary warm-up, after-idling, traffic jam, etc.), air is not supplied to the water tank and a fish that has low adaptability dies.

In other words, when the speed signal is being detected, oxygen is supplied to the water tank. At a speed of 0 km/h, however, no oxygen is supplied. When the continuous stop time Ts satisfies the following condition, all the fish fall critically ill.

$$Ts [sec] > (Life + Growth + Health) \times 10$$

Further, when

$$Ta [sec] > (Life + Growth + Health) \times 20$$

the fish die. As a result, an operator is able to save on the fuel expense.

(G-4) Water tank screen (Fig. 19)

As is shown in Fig. 19, on the water tank screen that the control unit 11 displays on the display 16, the water temperature is indicated by a thermometer 101, the pH level is indicated by using colors for a PH indicator 102, and the air supply is represented by bubbles 103. A manual Air pump switch 104 is depressed if the bubbles 103 stop when the vehicle is halted, and air is supplied. Values are also displayed for (1) through (5) below.

(1) Time: time elapsed following restart
(2) Pollution: fuel consumption is displayed after water in a water tank is changed at the time of an oil change. A travel distance after water has been changed may be displayed as a degree of contamination of water.
(3) pH: average expense following restart
(4) Temp: water temperature
(5) Air: remaining air. Decremented by one each second the vehicle is stopped.

(G-5) Alarming activity engaged in by fish

The control unit 11 determines in advance the warning standard (running for 10 successive seconds at a speed of 100 km/h or faster, for example) for the operating condition of the vehicle. In addition, the control unit 11 determines in advance an alarming activity performed by an arbitrary fish (e.g., a silver arowana eating another fish, which will be described later). When the vehicular operating condition is the equivalent of the warning standard, the control unit 11 issues a warning on the display 16.

The alarming activity for each fish should be referred to, (G-7), Tropical fish characters, which will be described later.

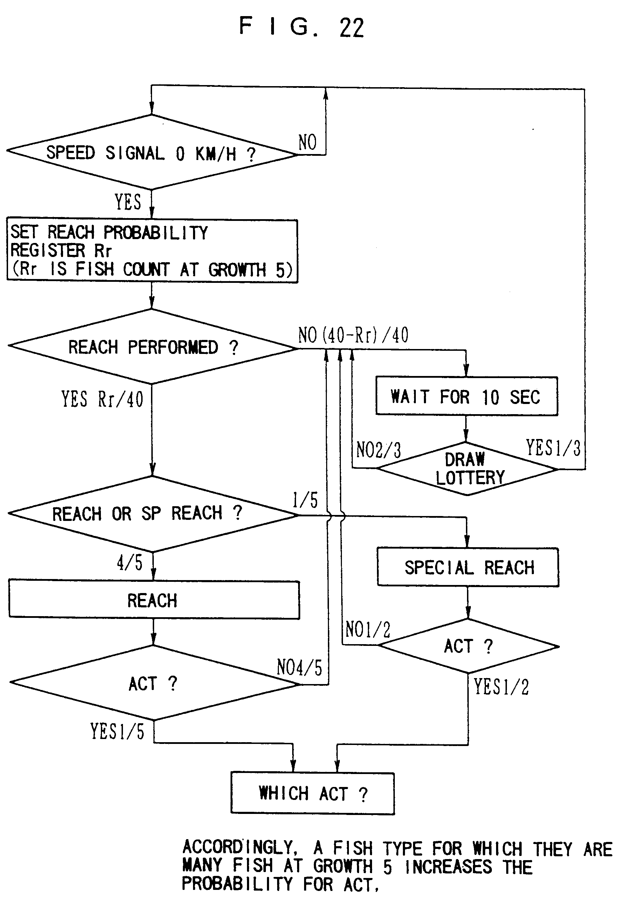

(G-6) Special movement by fish (Fig. 22)

The control unit 11 determines in advance the special movement (Act) that is inherent to each fish (e.g., changing body color) (Table 2). When the vehicular operating condition is in a specific state, such as at zero speed in a traffic jam, or at a speed in a traffic jam that is lower than a specific speed, a prediction (reach) of the special movement is displayed with a specific probability. When such a prediction is displayed, the special movement is performed with a specific probability.

Before a fish begins the special movement (Act), a reach sound is released. When the reach is made, the Act does not always occur. Usually, for a normal reach, the Act occurs with a probability of 1/5, and for a special reach, the Act occurs with the probability of 1/2. The reach sound is successively repeated twice for the special reach.

To perform the Act, only fish at Growth 5 are selected at random within 20 seconds following the release of the reach sound. The lottery for the reach and the Act is drawn only when the vehicle is stopped.

Further, a reach can be forcibly attached by using a hidden command (available even while running). In this case, however, the probability for the Act is reduced to 1/10 of the normal condition.

The special movement of each fish should be referred to, (G-7), Tropical fish characters, which will be described later.

(G-7) Tropical fish characters

The characters, alarming activities and special movements of individual fish are as follows.

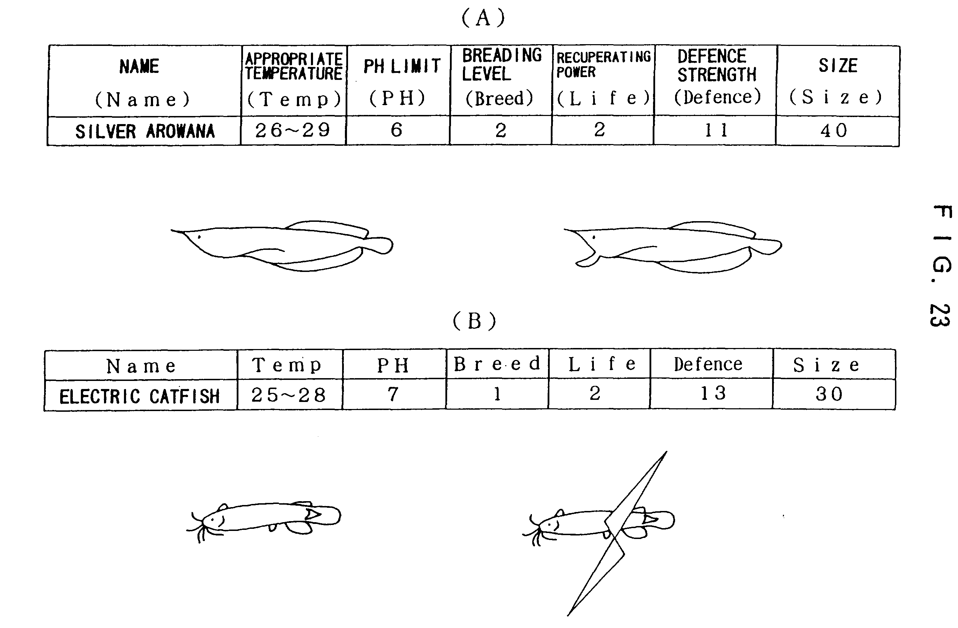

(1) Silver arowana (Fig. 23A)

Most popular among monstrous fishes. When a speed of over 100 km/h is continued for 10 seconds (warning standard), a sound for Death 1 is released, and a halo appears above a fish having the lowest level of Defence. When the speed of 100 km/h is continued for another 10 seconds, the silver arowana opens its mouth and eats one fish (alarming activity). When the speed of 100 km/h or higher continues for another 10 seconds after the silver arowana has eaten the first fish, the silver arowana eats another fish. When there are several fish having the same level of Defence, the fish that is to be eaten is determined by lottery, regardless of the levels of Growth. Only an arowana at Growth 5 can eat a fish. When there is more than one arowana at Growth 5, one of them eats a fish. The fish that is to be eaten is assumed to have a Defence 8 or lower.

In accordance with the result of the lottery for the Act, the body color is changed to the rainbow color (special movement).

(2) Electric catfish (Fig. 23B)

When the alarm value (warning standard) that is arbitrarily set for Alarm is reached, an electric catfish discharges electricity and kills a fish having the lowest Defence x Growth level (alarming activity). A halo and lightning blink alternately for five seconds before the fish is killed. One fish is killed for every alarm. A sound for Death 1 is produced with a 5-second time lag following the halting of the sound for the Alarm. The discharge is then begun.

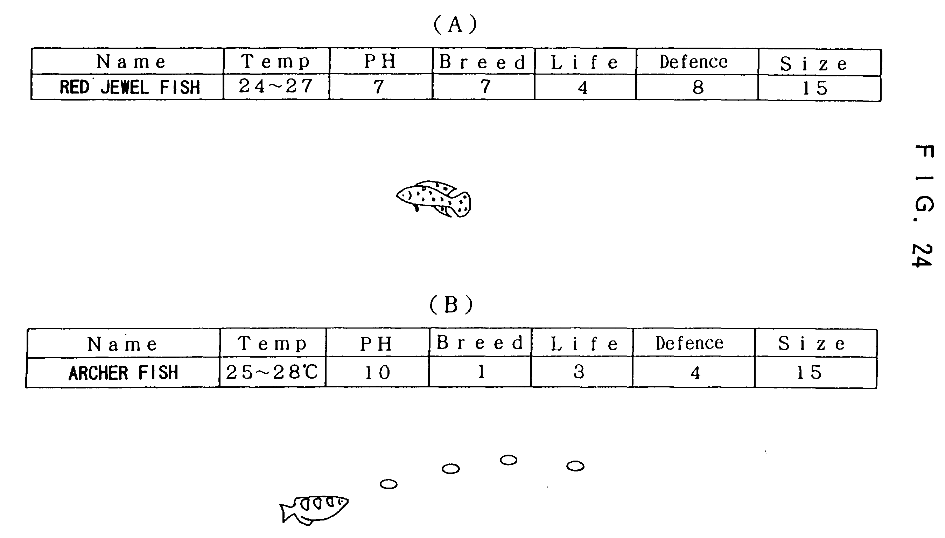

(3) Red jewel fish (Fig. 24A)

When the engine revolutions exceed 8000 rpm (warning standard), for thirty seconds a red jewel fish continuously hurls itself at a fish having the lowest Defence level and kills it (alarming movement). When the speed reduction G exceeds 0.5 and becomes convergent, a sound for Death 1 is produced five seconds later, and a red jewel fish begins to hurl itself at another fish. A halo appears above the attacked fish 10 seconds after the attack begins.

(4) Archer fish (Fig. 24B)

When a bug approaches an archer fish in accordance with the lottery of Act, the archer fish squirts a jet of water at the bug and eats it (special movement). The archer fish sometimes ignores a bug even though it comes near, or misses a bug at which it squirts water (special movement).

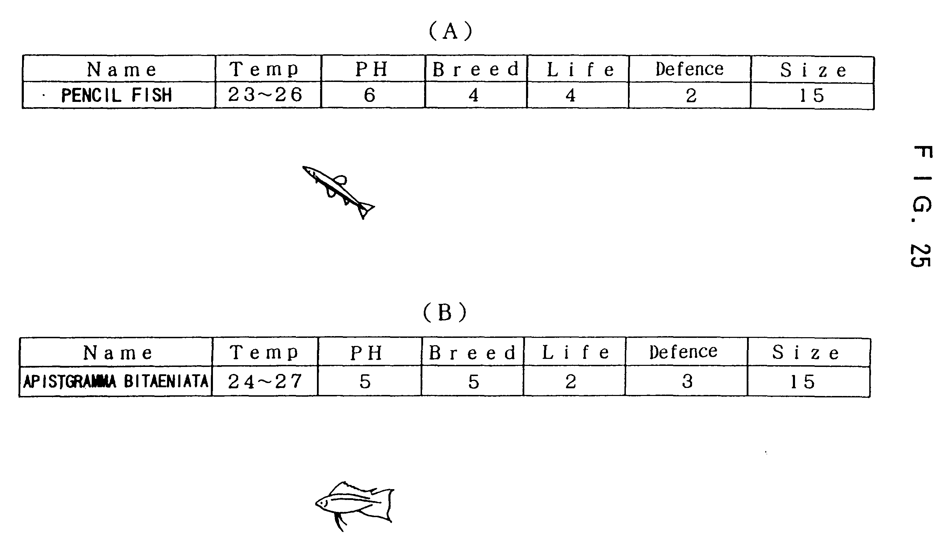

(5) Pencil fish (Fig. 25A)

Generally, a pencil fish moves by inclining its body at an angle of 45 degrees. According to the lottery for the Act, the pencil fish makes one turn (special movement).

(6) Apistgramma bitaeniata (Fig. 25B)

When the degree of contamination of the water in the water tank reaches the Limit (warning standard), a halo immediately begins blinking above an apistgramma bitaeniata, and it dies thirty seconds later (alarming activity).

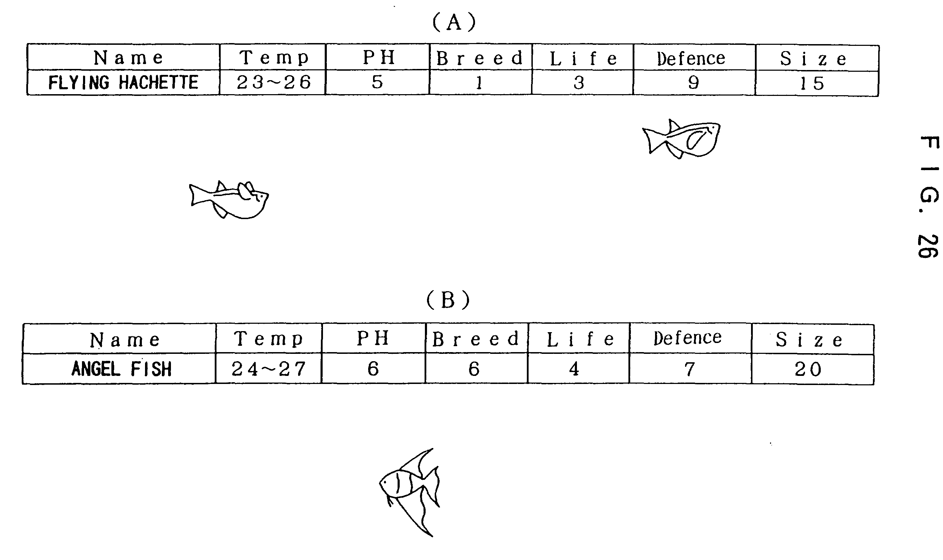

(7) Flying hachette (Fig. 26A)

In accordance with the result of the lottery for the Act, a flying hachette jumps out of the water (special movement).

(8) Angel fish (Fig. 26B)

In accordance with the result of the lottery for the Act, an angel fish eats eggs and small fry (special movement). Fish at Growth 0 and 1 are eaten, and are selected by lottery, regardless of their Defence or Life levels.

For a simulation display mode, the animate creatures are not limited to fishes and may be animals, plants, or inanimate beings.

The simulation display mode for this embodiment has the following operations (1) through (5).

(1) The vehicular operation condition can be ascertained by referring to conditional changes for a simulation, such as of an animate creature or a natural phenomenon (at least one of a change in the shape or the color of, or in the sounds produced by the simulation), that are displayed in the display 16 in consonance with the vehicular operational information. Therefore, the visual effects or the audio effects for the display of the vehicular operational information are enhanced, and to ascertain the vehicular operating condition, the design and acoustics can be made more interesting and pleasant to look at.

(2) The deterioration of the vehicular operating condition is judged by referring to a fault standard that is determined in advance, and an operator is informed that the deterioration has increased by the display of a critically ill or dead of living creature. When the operator acts to improve the condition of the critically ill animate creature by removing a fault, he may save the fish from imminent death.

(3a) Water temperature in the tank is increased when a vehicle is operated with a heavy load. When the water temperature at which fish can live is specified as a fault standard, an abnormality appearing during a high-load operation is evidenced by the critically ill condition or the death of fish.

(3b) Average fuel expense for operation of a vehicle is represented by the pH level in the water tank. When the pH level at which fish can exist is employed as a fault standard, a fuel expense abnormality is evidenced by the critically ill condition or the death of fish.

(3c) Deterioration of engine oil in a vehicle is represented by the degree of contamination of the water in a water tank. When, for example, a fuel consumption rate that is an index for the deterioration of the engine oil is employed as a fault standard, abnormal deterioration of the engine oil is evidenced by the critically ill condition or the death of a fish.

(3d) The idling period for a vehicle is represented by the state of the air supply in a water tank. A continuous stop time that is an index for the idling period is employed as a fault standard, and an unnecessary warm-up or unnecessary after-idling is evidenced by the critically ill condition or the death of a fish.

(4) When the vehicular operating condition is that which is represented by a warning standard, such as when an engine's revolutions per minute reading is too high, notification of an abnormal operating condition is performed by displaying a warning activity, such as one where one living creature kills another.

(5) In a specific vehicular operating condition, such as a vehicular speed of zero (e.g., being halted in a traffic jam), a predictive display and an adequate display of a special movement, such as the changing of color by an animate creature, are provided with a specified probability. As a result, an operator's interest in the information carried on the display is increased, and the stress that accompanies the operation of a vehicle is relieved.

[Vehicular audible sound detection device]

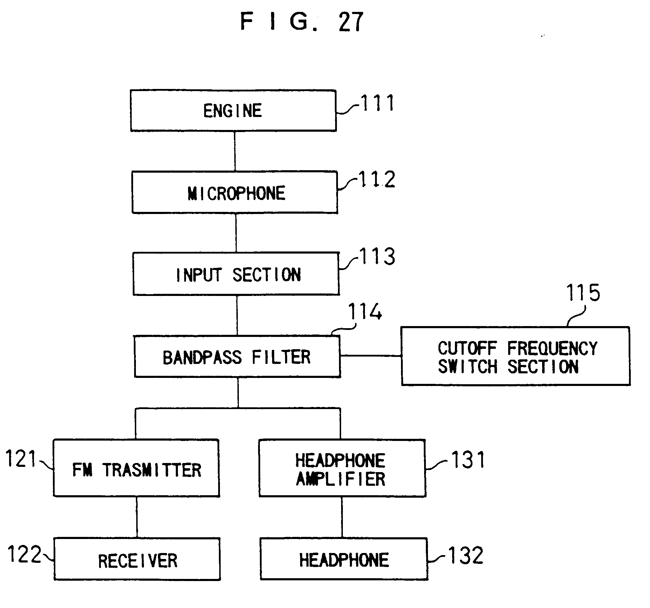

In Fig. 27, 111 denotes a engine, and the noise that is generated by an engine knock is collected and converted into an electric signal through a microphone 112, which is provided at the periphery of the engine in the engine compartment.

A signal output by the microphone 112 is transmitted through an input section 113 to a bandpass filter 114. The input section 113 includes an interface and an amplifier. The bandpass filter 114 cuts off, from the signal received from the microphone 112, the frequency band that is lower than that (6 KHz) of the noise produced by the knock, and passes (extracts) the frequency band (6 KHz to 8 KHz) of the noise produced by the knock and a second-order harmonic signal.

A signal from the bandpass filter 114 is sent to (a) an FM transmitter 121 and (b) a headphone amplifier 131. The signal may be simultaneously transmitted in parallel to both the FM transmitter 121 and the headphone amplifier 131, or may be selectively transmitted one of them.

The signal that has been received by the FM transmitter 121 is then transmitted by radio (an FM wave) to a receiver 122, such as a vehicle-mounted radio. Upon receipt of the signal, the receiver 122 employs the signal received from the FM transmitter 121 to reproduce the sound of a knock, and releases it through a loudspeaker. The receiver 122 may be installed inside or outside the vehicle, but in either case, the condition where knock has occurred can be ascertained either inside or outside the vehicle.

A signal that has been transmitted to the headphone amplifier 131 is then sent to a headphone 132 through a terminal, so that an operator can hear the knock and ascertain its occurrence.

The bandpass filter 114 has a cutoff frequency switch section 115. The cutoff frequency switch section 115 changes a cutoff frequency of the bandpass filter 114 to pass (extract) a signal in a frequency band for a desired audible sound (e.g., an abnormal turbine noise), other than the frequency band for the noise produced by a knock.

According to this device, the following operations (1) through (3) are provided.

(1) With the simple structure that includes the microphone 112, the bandpass filter 114 and the acoustic output means (the FM transmitter 121 and the receiver 122, or the headphone amplifier 131 and the headphone 132), a real, specific sound, such as the noise produced by a knock, that occurs in a vehicle can be transmitted to an operator, so that the operator is promptly notified of the occurrence of the specified sound.

(2) Since the radio transmitter (an FM transmitter) 121 and the radio receiver (a radio, etc.) 122 are used as the acoustic output means, a signal for a specific sound can be exchanged, for example, between the radio transmitter 121 that is installed in a vehicle's engine compartment and the radio receiver 122 that is provided inside or outside the vehicle. Therefore, as it is not necessary for signal lines to be installed between the transmitter 121 installation portion and the receiver 122 installation portion, the structure of the device is simplified. Further, the notification of the occurrence of a specific sound can be effected not only inside the vehicle but also at a remote area outside the vehicle.

(3) Since the cutoff frequency switch section 115 is included in the bandpass filter 114, the frequency band that is passed through (extracted by) the bandpass filter 114 can be arbitrarily changed in consonance with a desired audible sound. By using the same device, several types of specific sounds (e.g., not only noise produced by a knock but also abnormal turbine noise) can be selected.

A plurality of bandpass filters may be used to carry out this invention, and a plurality of types of specific sounds in different frequency bands may be detected by the same mechanism.

Further, according to the present invention, only a specific sound, the strength of which exceeds a certain level, may be reproduced and output by the acoustic output means.

INDUSTRIAL USABILITY OF THE INVENTION

As is described above, according to the present invention, the visual or acoustic effects that are provided by a display of vehicular operational information can be enhanced, and it can be more interesting and pleasant for an operator to look at when ascertaining an operating condition of a vehicle.

According to the present invention, many transient operating condition phases can be evaluated.

According to the present invention, the danger represented by an icy road surface during movement can be predicted.

According to the present invention, a running resistance of a vehicle can be highly reliably acquired.

According to the present invention, a degree of deterioration of lubricating oil can be accurately detected, and a time for the lubricating oil to be changed can be adequately displayed.

According to the present invention, with a simple structure, an operator can be promptly notified of the occurrence of a specific vehicle sound.

Table 1

| Engine type | Limit (1) |
|---|---|
| Small | 530 |
| Small Turbo (S) | 410 |
| Normal | 800 |
| Normal Turbo (M) | 710 |
| Normal Turbo (L) | 830 |

Table 2

| Fish | Act | Frequencies |
|---|---|---|
| Arowana | Changes color | 3 |
| Pike | Blinks | 3 |
| Archer Fish | Squirts water at bugs | 2 |
| Archer Fish | At water surface, lets bugs go by | 1 |
| Discus | Changes to deeper or lighter color | 3 |
| Pencil Fish | Rotates once | 1 |
| Hachette | Jumps from water | 2 |
| Angel Fish | Eats one fry (Growth 0, 1) | 4 |
| Frontosa | Makes a face | 1 |
| Betta | Fights another Betta and kills it | 3 |

**Claims**

1. A vehicular information display apparatus for displaying vehicular operational information comprising:

   a display for displaying vehicular operational information by employing a simulation; and
   a control unit for converting said vehicular operational information that is received into a conditional change for said simulation, and for permitting said display to exhibit said conditional change of said simulation.

2. A vehicular information display apparatus according to claim 1, wherein said simulation is of a living creature in the display, and wherein said control unit converts said vehicular operational information into an ecological change affecting said living creature.

3. A vehicular information display apparatus according to claim 2, wherein said control unit determines in advance a fault standard by which to cope with a degraded vehicular operating condition, and wherein when said operating condition exceeds said fault standard, said living creature is determined to be critically ill, and is regarded as being dead when said living creature has been in a critically ill state for a specified time.

4. A vehicular information display apparatus according to claim 2 or 3, wherein said living creature is a fish that is in a virtual water tank shown on said display, and wherein said control unit performs at least one of the following functions:

(a) increasing temperature in said water tank when said vehicle is being operated with a heavy load;
(b) representing an average fuel expense for said vehicle by displaying a pH level for said water tank;
(c) representing deterioration of engine oil in said vehicle by displaying a degree of contamination of water in said water tank; and
(d) representing an idling period for said vehicle by displaying an air supply state for said water tank.

5. A vehicular information display apparatus according to one of claims 2 through 4, wherein said control unit determines in advance a warning standard to cope with said vehicular operating condition, and also determines in advance a warning movement that said living creature will make when said vehicular operating condition is that represented by said warning standard, so that when said vehicular operating condition is that represented by said warning standard, said warning movement by said living creature is displayed.

6. A vehicular information display apparatus according to one of claims 2 through 5, wherein said control unit determines in advance a special movement inherent to said living creature, and wherein when said vehicle is in a specific vehicular operating condition, display of a prediction with a specified probability for said special movement is performed, and after said display of said prediction for said special movement, an adequate display with a specified probability for said special movement is performed.

7. A vehicular information display apparatus, which displays on a display transient operational information for an arbitrary vehicular operation period, comprising:

a calculation unit for performing calculation using multiple sets of transient operational data that correspond to vehicular operational information items, and for displaying, on said display, a set of transient operational data for a specific operation period, said calculation unit permitting said display to display said set of transient operational data for each of said operation periods.

8. A vehicular information display apparatus, which provides vehicular operational information on a display, comprising:

a detector for detecting a road surface temperature while moving; and
a calculation unit for representing a change in said road surface temperature, which is detected by said detector, relative to transient vehicular operational information.

9. A vehicular information display apparatus according to claim 8, wherein said calculation unit determines in advance a prior notice standard for an icy road surface relative to said change in said road surface temperature that is detected, and wherein when said change in said road surface temperature has reached said previous notice standard, a prior notice for said icy road surface condition is displayed.

10. A vehicular information display apparatus, which employs vehicular operational information for a display, comprising:

a detector, for detecting a travel speed; and a calculation unit, for performing regression analysis of a relationship between said travel speed of a vehicle and a travel distance, and for representing as a polynomial graph, on said display, said relationship between a running resistance, which is the result of said regression analysis, and said travel speed.

**11.** A vehicular information display apparatus according to claim 10, wherein said calculation unit calculates an estimated generated power for said vehicle and presents on said display the result of the calculation together with said travel distance.

**12.** An engine oil change period display device, which indicates on a display a period for changing engine lubricating oil, comprising:

a detector for detecting a consumed fuel quantity; and
a calculation unit for accumulating quantity of fuel to be used from a detected results of the detector and determining in advance a limiting quantity of fuel to be used that corresponds to a lubricating oil change period, and for exhibiting said lubricating oil change period on said display when a cumulative consumed fuel quantity reaches the limiting quantity of fuel to be used.

**13.** A vehicular audible sound detection device, which detects a specific sound that occurs during operation of a vehicle, comprising:

a microphone installed in said vehicle;
a bandpass filter for passing in a frequency band for said specified noise a signal extracted from a signal output through said microphone; and
acoustic output means for reproducing said specific sound from a signal output by said bandpass filter and for outputting said specific sound.

**14.** A vehicular audible sound detection device according to claim 13, wherein said acoustic output means includes:

a radio transmitter for transmitting said signal from said bandpass filter; and
a radio receiver for receiving a signal transmitted by said radio transmitter, and for reproducing said specific sound from said signal and for outputting said specific sound.

**15.** A vehicular audible sound detection device according to claim 13 or 14, wherein said bandpass filter has cutoff frequency change means.

**16.** A vehicular audible sound detection device, which detects a specific sound that occurs during an operation of a vehicle, comprising:

a microphone installed in said vehicle;
a bandpass filter for passing in a frequency band for said specific sound a signal extracted from a signal output through said microphone; and
a radio transmitter for transmitting a signal output from said bandpass filter.

# F I G. 1

10

REMOTE CONTROLLER — 17

— 18

| 13 | 11 | 16 |

VEHICLE-MOUNTED COMPUTER

CONTROL UNIT

DISPLAY

PERSONAL COMPUTER

19

14 — CONNECTOR

15A 15B 15C 15D 15E 15F

# F I G. 2

(A)

(B)

# F I G. 3

16

DIGITAL

| | | |
|---|---|---|
| FUEL | 1245 | cc/min |
| COST | 07.4 | km/l |
| SPEED | 054 | km/h |
| INJECT | 12.3 | % |
| REV | 5500 | rpm |
| TEMP H | 0920 | ℃ |
| TEMP L | 85.9 | ℃ |
| PRESS | -204 | mmhg |
| VOLT | 04.2 | V |

HOME    HOLD    SCALE

29

# FIG. 4

13  15A  15F

30(11)

31 SIGNAL INPUT SECTION

34 OPERATION SECTION

32 CALCULATOR

16 DISPLAY

33 STORAGE SECTION

# FIG. 5

13  15A  15F

40(11)

41 SIGNAL INPUT SECTION

ABNORMALITY SCREEN AND SOUND GENERATER

42 ABNORMALITY DETERMINER

43 IMAGE SIGNAL SWITCH SECTION

16 DISPLAY

44 SOUND SIGNAL SWITCH SECTION

EXTERNAL INPUT FOR VIDEO DECK AND CAR NAVIGATION SYSTEM

# F I G. 6

## F I G. 7

16

ALARM

47A

47B

46

TRIG

45

SELECT

HOME

FUEL ⌁ 1970 cc/min
COST ⌁ 03. 0 km/l
SPEED ⌁ 100 km/h
INJECT ⌁ 100 %
RPM OFF 8500 rpm

TEMP H ⌁ 950 ℃
TEMP L ⌁ 00. 0 ℃
PRESS OFF 1. 0 kgf/cm²
VOLT OFF 12. 0 v

## F I G. 8

16

ANALOG

24 PEAK    25 RESET

21

TEMP H

0
0.5
500
mm/hg
1.0
1.5
2.0

PRESS
kgf/cm²

22

0
500
1000
1500
2000
2500
3000

FUEL
cc/min

HOME

SET A    SCALE    SET B

26A                26B

# F I G. 9

50(11)

51
TRAVEL DISTANCE CALCULATOR

52
FUEL CONSUMPTION CALCULATOR

53
OPERATING TIME CALCULATOR

54
CENTRAL CALCULATOR

55
STORAGE SECTION

16
DISPLAY

# F I G. 10

16

*PAST*

| | TIME | DISTANCE km | FUEL l | COST km/l | SPEED km/h |
|---|---|---|---|---|---|
| A | 12:24. 01 | 478. 4 | 059. 2 | 06. 8 | 027. 1 |
| B | 00:00. 00 | 000. 0 | 000. 0 | 00. 0 | 000. 0 |
| C | 00:00. 00 | 000. 0 | 000. 0 | 00. 0 | 000. 0 |
| D | 00:00. 00 | 000. 0 | 000. 0 | 00. 0 | 000. 0 |
| E | 00:00. 00 | 000. 0 | 000. 0 | 00. 0 | 000. 0 |

HOME    SELECT    START    STOP    RESET
        56        57       58      59

# F I G. 11

61 — INFRARED SENSOR

60(11)

62 — SIGNAL INPUT SECTION

63 — CALCULATOR

16 — DISPLAY

64 — STORAGE SECTION

# F I G. 12

START

MEASURE ROAD SURFACE TEMPERATURE

RECORD ROAD SURFACE TEMPERATURE

DRAW TEMPERATURE GRAPH

# F I G. 13

(A)

TEMPERATURE(℃)

TIME(s e c)

(B)

TEMPERATURE(℃)

DISTANCE(k m)

(C)

TEMPERATURE(℃)

AIR PRESSURE(h p a)

F I G. 14

```
         71
70(11)  ┌──────────┐
        │  SPEED   │
        │  SENSOR  │
        └────┬─────┘
   ┌─────────┼────────────────────────┐
   │    72   ▼                         │
   │    ┌──────────┐                   │
   │    │  SPEED   │                   │
   │    │ DETECTOR │        16         │
   │    └────┬─────┘                   │
   │    73   ▼             ┌─────────┐ │
   │    ┌──────────┐       │         │ │
   │    │CALCULATOR├──────▶│ DISPLAY │ │
   │    └────┬─────┘       │         │ │
   │    74   ▲             └─────────┘ │
   │    ┌──────────┐                   │
   │    │ STORAGE  │                   │
   │    │ SECTION  │                   │
   │    └──────────┘                   │
   └────────────────────────────────── ┘
```

F I G. 15

NORMAL ROUTINE

```
        ( START )
            │
   ┌────────┼──────────────┐
   │        ▼              │
   │  ┌──────────────┐     │
   │  │ DETECT SPEED │     │
   │  └──────┬───────┘     │
   │         ▼             │
   │  ┌──────────────┐     │
   │  │  CALCULATE   │     │
   │  │GENERATED POWER│    │
   │  └──────┬───────┘     │
   │         ▼             │
   │  ┌──────────────┐     │
   │  │DISPLAY ENGINE│     │
   │  │POWER ON GRAPH│     │
   │  └──────────────┘     │
   └───────────────────────┘
```

INITIALIZATION ROUTINE

```
        ( START )
            │
            ▼
   ┌──────────────────┐
   │ DETECTED SPEED   │
   └────────┬─────────┘
            ▼
   ┌──────────────────┐
   │CALCULATE RUNNING │
   │RESISTANCE        │
   └────────┬─────────┘
            ▼
   ┌──────────────────┐
   │LOG IN A PLURALITY│
   │OF SETS OF SPEEDS │
   │AND RUNNING       │
   │RESISTANCES       │
   └────────┬─────────┘
            ▼
   ┌──────────────────┐
   │PERFORM REGRESSION│
   │ANALYSIS OF RELATIONSHIP│
   │BETWEEN SPEED AND RUNNING│
   │RESISTANCE        │
   └────────┬─────────┘
            ▼
   ┌──────────────────┐
   │   DRAW GRAPH     │
   └──────────────────┘
```

# F I G. 16

16

*FRICTION*

*FRICTION*

*102ps*

500

ps

km/h          300

HOME   SCALE          SET

# F I G. 17

# F I G. 18

# F I G. 19

# F I G. 20

| FISH | TEMP | PH | LIFE | DEFENCE | BREED |
|---|---|---|---|---|---|
| ✓AROWANA | 26~29 | 6 | 2 | 11 | 2 |
| PIKE | 16~26 | 7 | 2 | 12 | 2 |
| ✓CATFISH | 25~28 | 7 | 2 | 13 | 1 |
| REDJEWEL | 24~27 | 7 | 4 | 8 | 7 |
| ARCHER | 25~28 | 10 | 3 | 4 | 1 |
| DISCUS | 26~32 | 6 | 1 | 5 | 3 |
| ✓PENCIL | 23~26 | 6 | 4 | 2 | 4 |
| AKAHIRE | 15~25 | 6 | 5 | 1 | 10 |
| BITAENIATA | 24~27 | 5 | 2 | 3 | 5 |
| HACHETTE | 23~26 | 5 | 3 | 9 | 1 |
| ANGEL | 24~27 | 6 | 4 | 7 | 6 |
| FRONTOSA | 24~27 | 9 | 3 | 10 | 4 |
| BETTA | 24~27 | 6 | 4 | 6 | 6 |

START    CANCEL

# F I G. 21

TROPICAL FISH MAP

THE VERTICAL AND HORIZONTAL FINE LINES INDICATE THE
LIVABLE RANGE FOR EACH FISH

# F I G. 22

ACCORDINGLY, A FISH TYPE FOR WHICH THEY ARE
MANY FISH AT GROWTH 5 INCREASES THE
PROBABILITY FOR ACT.

# F I G. 23

(A)

| NAME (Name) | APPROPRIATE TEMPERATURE (Temp) | PH LIMIT (PH) | BREADING LEVEL (Breed) | RECUPERATING POWER (Life) | DEFENCE STRENGTH (Defence) | SIZE (Size) |
|---|---|---|---|---|---|---|
| SILVER AROWANA | 26~29 | 6 | 2 | 2 | 11 | 40 |

(B)

| Name | Temp | PH | Breed | Life | Defence | Size |
|---|---|---|---|---|---|---|
| ELECTRIC CATFISH | 25~28 | 7 | 1 | 2 | 13 | 30 |

(A)

| Name | Temp | PH | Breed | Life | Defence | Size |
|---|---|---|---|---|---|---|
| RED JEWEL FISH | 24~27 | 7 | 7 | 4 | 8 | 15 |

(B)

| Name | Temp | PH | Breed | Life | Defence | Size |
|---|---|---|---|---|---|---|
| ARCHER FISH | 25~28℃ | 10 | 1 | 3 | 4 | 15 |

FIG. 24

EP 0 841 541 A1

# F I G. 25

(A)

| Name | Temp | PH | Breed | Life | Defence | Size |
|---|---|---|---|---|---|---|
| PENCIL FISH | 23~26 | 6 | 4 | 4 | 2 | 15 |

(B)

| Name | Temp | PH | Breed | Life | Defence | Size |
|---|---|---|---|---|---|---|
| APISTGRAMMA BITAENIATA | 24~27 | 5 | 5 | 2 | 3 | 15 |

(A)

| Name | Temp | PH | Breed | Life | Defence | Size |
|---|---|---|---|---|---|---|
| FLYING HACHETTE | 23~26 | 5 | 1 | 3 | 9 | 15 |

(B)

| Name | Temp | PH | Breed | Life | Defence | Size |
|---|---|---|---|---|---|---|
| ANGEL FISH | 24~27 | 6 | 6 | 4 | 7 | 20 |

FIG. 26

EP 0 841 541 A1

F I G. 27

```
┌─────────────────┐
│     ENGINE      │ ～111
└─────────────────┘
         │
┌─────────────────┐
│   MICROPHONE    │ ～112
└─────────────────┘
         │
┌─────────────────┐
│  INPUT SECTION  │ ～113
└─────────────────┘
         │
                      114
┌─────────────────┐      ┌─────────────────────┐
│ BANDPASS FILTER │──────│ CUTOFF FREQUENCY    │
└─────────────────┘      │ SWITCH SECTION      │ ～115
         │               └─────────────────────┘
    ┌────┴────┐
┌──────────────┐    ┌──────────────┐
│FM TRASMITTER │    │  HEADPHONE   │ ～131
└──────────────┘    │  AMPLIFIER   │
  121               └──────────────┘
         │               │
┌──────────────┐    ┌──────────────┐
│   RECEIVER   │    │  HEADPHONE   │ ～132
└──────────────┘    └──────────────┘
  122
```

## INTERNATIONAL SEARCH REPORT

| International application No. |
| --- |
| PCT/JP96/03221 |

**A. CLASSIFICATION OF SUBJECT MATTER**

Int. Cl$^6$ G01D7/00-7/12

According to International Patent Classification (IPC) or to both national classification and IPC

**B. FIELDS SEARCHED**

Minimum documentation searched (classification system followed by classification symbols)

Int. Cl$^6$ G01D7/00-7/12, G09F9/00

Documentation searched other than minimum documentation to the extent that such documents are included in the fields searched

| | |
| --- | --- |
| Jitsuyo Shinan Koho | 1926 – 1996 |
| Kokai Jitsuyo Shinan Koho | 1971 – 1995 |
| Toroku Jitsuyo Shinan Koho | 1994 – 1996 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP, 4-268413, A (Hitachi, Ltd.), September 24, 1992 (24. 09. 92)(Family: none) | 1 – 6 |
| A | JP, 59-4423, U (Sharp Corp.), January 12, 1984 (12. 01. 84)(Family: none) | 1 – 6 |
| A | JP, 56-16812, A (Nippondenso Co., Ltd., Toyota Motor Corp.), February 18, 1981 (18. 02. 81)(Family: none) | 7 |
| A | JP, 4-55508, U (Nissan Diesel Motor Co., Ltd.), May 13, 1992 (13. 05. 92)(Family: none) | 7 |
| A | JP, 62-44744, U (Nissan Motor Co., Ltd.), March 18, 1987 (18. 03. 87)(Family: none) | 7 |
| A | JP, 59-188545, A (Nippondenso Co., Ltd.), October 25, 1984 (25. 10. 84)(Family: none) | 8, 9 |
| A | JP, 4-136547, U (Japan Electronic Control Systems Co., Ltd.), | 10, 11 |

☒ Further documents are listed in the continuation of Box C.   ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| January 27, 1997 (27. 01. 97) | February 4, 1997 (04. 02. 97) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

**INTERNATIONAL SEARCH REPORT**

International application No.

PCT/JP96/03221

| C (Continuation). DOCUMENTS CONSIDERED TO BE RELEVANT | | |
|---|---|---|
| Category* | Citation of document, with indication, where appropriate, of the relevant passages | Relevant to claim No. |
| | December 18, 1992 (18. 12. 92) (Family: none) | |
| A | JP, 5-214920, A (Hitachi Construction Machinery Co., Ltd.),<br>August 24, 1993 (24. 08. 93) (Family: none) | 12 |
| A | JP, 63-245798, A (Honda Motor Co., Ltd.),<br>October 12, 1988 (12. 10. 88) (Family: none) | 12 |
| | Microfilm of the specification and drawings annexed to the written application of Japanese Utility Model Application No. 52764/1983 (Laid-open No. 158042/1984) (Nissan Motor Co., Ltd.),<br>October 23, 1984 (23. 10. 84), | |
| X<br>A | Page 3, line 20 to page 5, line 4 (Family: none) | 13<br>14 - 16 |
| A | JP, 1-314925, A (Mitsubishi Electric Corp.),<br>December 20, 1989 (20. 12. 89) (Family: none) | 13 - 16 |
| A | JP, 61-142367, A (Nippondenso Co., Ltd.),<br>June 30, 1986 (30. 06. 86)<br>& US, 4617895, A & US, 4711214, A | 13 - 16 |
| A | JP, 58-201031, A (Matsushita Electric Industrial Co., Ltd.),<br>November 22, 1983 (22. 11. 83) (Family: none) | 13 - 16 |

Form PCT/ISA/210 (continuation of second sheet) (July 1992)